# EUROPEAN PATENT APPLICATION

(11) **EP 4 730 059 A1**
(43) Date of publication of application: **22.04.2026**
(21) Application number: 24936919.0
(22) Date of filing: 26.04.2024
(51) Int. Cl.: G05B 19/4093, B23Q 15/00

(54) **MACHINE TOOL, MACHINING PROGRAM GENERATION SUPPORT METHOD, COMPUTER, AND COMPUTER PROGRAM**

(71) Applicant: Yamazaki Mazak Corporation, Niwa-gun, Aichi 480-0197 (JP)
(72) Inventor: KATAYAMA, Takuro, Niwa-gun, Aichi 480-0197 (JP); KOIKE, Shunsuke, Niwa-gun, Aichi 480-0197 (JP); YAMAMOTO, Mikihito, Niwa-gun, Aichi 480-0197 (JP); KIUCHI, Yu, Niwa-gun, Aichi 480-0197 (JP); KUMASAKA, Takuya, Niwa-gun, Aichi 480-0197 (JP)
(74) Representative: TBK
(86) International application number: PCT/JP2024/016524
(87) International publication number: WO 2025/225003

(57) **Abstract**

A method of using a computer to assist machine program generation includes associating assigned tools with tools to be used respectively in machining processes. This method further includes receiving, from a user, an input to change a tool to be used in a selected process among the machining processes from a first assigned tool to a first selected tool, the first assigned tool being assigned to the selected process among the assigned tools. This method further includes determining whether an improvement request process exists in any one of the machining processes other than the selected process, a second assigned tool assigned to the improvement request process among the assigned tools being unusable in the improvement request process due to the changing from the first assigned tool to the first selected tool. This method further includes changing a tool to be used in the improvement request process from the second assigned tool to a second selected tool that is usable in the improvement request process in a case where the improvement request process is determined to exist.

## Description

### TECHNICAL FIELD

The present invention relates to a machine tool, a machine program generation assisting method, a computer, and a computer program.

### BACKGROUND ART

Patent Documents 1 to 3 show an interactive machine program generation apparatus. Patent Documents 1 and 2 show a technique for generating a machine program by automatically selecting an optimum tool according to the machining shape. Patent Document 3 shows a technique for generating a tool path for machining a machining area created by a user based on the tool selected by the user.

### RELATED ART DOCUMENTS

### Patent documents

[Patent Document 1] Patent No. 6674076
[Patent Document 2] Patent No. 4286836
[Patent Document 3] Japanese Laid-Open Patent Publication No. 2013-186866

### SUMMARY OF INVENTION

### PROBLEM TO BE SOLVED BY INVENTION

When the optimum tool selected by the technique illustrated in Patent Documents 1 and 2 cannot be used for a machine tool, another tool is to be selected. With Patent Document 3, a machine program that can perform machining with the tool selected by the user can be generated even in a case where the optimum machine tool is unusable, however, many machine programs consist of multiple machining processes, and tools of another process may become unusable when a tool of one process is changed. The invention of Patent Document 3 is unable to attend to such problem.

An object of the technology disclosed in this application is to allow, for example, a tool to be appropriately changed with respect to another process affected by the change of tools in a case the case where a tool of one process of a machine program consisting of multiple machining processes is changed.

### MEANS FOR SOLVING PROBLEM

According to the first aspect of the present disclosure, a machine program generation assisting method carried out by a computer includes associating assigned tools with tools to be used respectively in machining processes. This method includes receiving, from a user, an input to change a tool to be used in a selected process among the machining processes from a first assigned tool to a first selected tool, the first assigned tool being assigned to the selected process among the assigned tools. This method includes determining whether an improvement request process exists in any one of the machining processes other than the selected process, a second assigned tool assigned to the improvement request process among the assigned tools being unusable in the improvement request process due to the changing from the first assigned tool to the first selected tool. This method includes changing a tool to be used in the improvement request process from the second assigned tool to a second selected tool that is usable in the improvement request process in a case where the improvement request process is determined to exist.

According to the second aspect of the present disclosure, a machine program generation assisting method carried out by a computer includes associating assigned tools with tools to be used respectively in machining processes. This method includes setting each tool path of the assigned tools as a preset tool path. This method includes receiving, from a user, an input to change a tool to be used in a selected process among the machining processes from a first assigned tool to a first selected tool, the first assigned tool being assigned to the selected process among the assigned tools. This method includes determining whether an improvement request process exists in any one of the machining processes other than the selected process, a first selected tool being unusable in the improvement request process due to the changing from the first assigned tool to the first selected tool unless the preset tool path of the second assigned tool assigned to the improvement request process among the assigned tools is changed. This method includes changing a tool path of the second assigned tool, so that the first selected tool becomes usable in a case where the improvement request process is determined to exist.

According to the third aspect of the present disclosure, a machine program generation assisting method carried out by a computer includes associating assigned tools with tools to be used respectively in machining processes. This method includes setting each tool path of the assigned tools as a preset tool path. This method includes receiving, from a user, an input to change a tool path of the tool to be used in a selected process among the machining processes from the preset tool path of the tool to a selected tool path. This method includes determining whether an improvement request process exists in any one of the machining processes other than the selected process, a second assigned tool assigned to the improvement request process among the assigned tools being unusable in the improvement request process due to the changing to the selected tool path. This method includes changing a tool to be used in the improvement request process from the second assigned tool to a second selected tool that is usable in the improvement request process in a case where the improvement request process is determined to exist.

According to the fourth aspect of the present disclosure, with the machine program generation assisting method carried out by a computer according to the first or third aspect, the selected process includes a pre-machining process for forming an insertion hole into which a tool to be used in the improvement request process is inserted. The improvement request process includes a side surface enlarging process for inserting the tool to be used in the improvement request process into the insertion hole formed in the pre-machining process and cutting a side surface of the insertion hole.

According to the fifth aspect of the present disclosure, with the machine program generation assisting method carried out by a computer according to the fourth aspect, the improvement request process is determined to exist in a case where a size of the insertion hole formed by the first selected tool is smaller than a size of the insertion hole formed by the first assigned tool such that the second assigned tool cannot be inserted into the insertion hole.

According to the sixth aspect of the present disclosure, with the machine program generation assisting method carried out by a computer according to the fifth aspect, the second assigned tool is changed to the second selected tool having a shape capable of being inserted into the insertion hole formed by the first selected tool in a case where the improvement request process is determined to exist.

According to the seventh aspect of the present disclosure, with the machine program generation assisting method carried out by a computer according to the first or second aspect, the improvement request process includes a pre-machining process for forming an insertion hole into which a tool to be used in the selected process is inserted. The selected process includes a side surface enlarging process for inserting the tool that is to be used in the selected process into the insertion hole formed in the pre-machining process and cutting a side surface of the insertion hole.

According to the eighth aspect of the present disclosure, with the machine program generation assisting method carried out by a computer according to the seventh aspect, the improvement request process is determined to exist in a case where the first selected tool becomes larger than the first assigned tool such that the first selected tool cannot be inserted into the insertion hole.

According to the ninth aspect of the present disclosure, the machine program generation assisting method carried out by a computer according to the eighth aspect further includes changing the second assigned tool to the second selected tool usable for forming an insertion hole having a size that allows insertion of the first selected tool in a case where the improvement request process is determined to exist.

According to the tenth aspect of the present disclosure, with the machine program generation assisting method carried out by a computer according to any one of the fourth aspect to the ninth aspect, a tool to be used to form the insertion hole is a drilling tool, and a tool to be inserted into the insertion hole includes at least one of a turning tool or a grooving tool.

According to the eleventh aspect of the present disclosure, with the machine program generation assisting method carried out by a computer according to any one of the fourth aspect to the ninth aspect, a tool to be used to form the insertion hole is a grooving tool, and a tool to be inserted into the insertion hole is a turning tool.

According to the twelfth aspect of the present disclosure, the machine program generation assisting method carried out by a computer according to any one of the first to eleventh aspects further includes calculating a first cutting shape to be cut by the second assigned tool, displaying the first cutting shape on a display, calculating a second-cutting shape to be cut in the improvement request process based on the change in the improvement request process, and displaying the second cutting shape on the display.

According to the thirteenth aspect of the present disclosure, with the machine program generation assisting method carried out by a computer according to any one of the first to twelfth aspects, the determining of the existence of the improvement request process includes storing a correspondence relation between the selected process and the improvement request process in a storage, acquiring information representing the improvement request process from the selected process by the input based on the correspondence relation, and searching in the machining processes for a process that matches the improvement request process based on the information.

According to the fourteenth aspect of the present disclosure, the machine program generation assisting method carried out by a computer according to any one of the first aspect to the thirteenth aspect, further includes generating the machine program in which the first assigned tool of the assigned tools is corrected to the first selected tool in a case where the improvement request process is determined not to exist. In a case where the improvement request process is determined to exist, there further includes generating the machine program in which the first assigned tool of the assigned tools is corrected to the first selected tool and the second assigned tool is corrected to the second selected tool.

According to the fifteenth aspect of the present disclosure, with the machine program generation assisting method carried out by a computer according to any one of the first to fourteenth aspects, associating assigned tools with tools to be used respectively in machining processes includes generating a primary machine program that performs machining by using the assigned tools in the machining processes.

A computer according to a sixteenth aspect of the present disclosure is configured to carry out the machine program generation assisting method according to any one of the first to fifteenth aspects.

A machine tool according to a seventeenth aspect of the present disclosure includes a computer configured to perform the machine program generation assisting method according to any of the first through fifteenth aspects.

A computer program according to an eighteenth aspect of the present disclosure includes instructions which, when executed by a computer, cause the computer to carry out the machine program generation assisting method according to any one of the first to fifteenth aspects.

A computer-readable medium according to a nineteenth aspect of the present disclosure includes instructions which, when executed by a computer, cause the computer to carry out the machine program generation assisting method according to any one of the first to fifteenth aspects.

With the machine program generation assisting method according to the first aspect, the computer according to the sixteenth aspect configured to execute the machine program generation assisting method according to the first aspect, the machine tool according to the seventeenth aspect, and the computer program according to the eighteenth aspect including instructions to cause a computer to execute the machine program generation assisting method according to the first aspect, and the computer-readable medium according to the nineteenth aspect, a computer is allowed to determine the existence of an improvement request process in which a second assigned tool assigned to the improvement request process among the assigned tools is unusable in the improvement request process due to the changing from the first assigned tool to the first selected tool. The computer is allowed to change a tool to be used in the improvement request process from the second assigned tool to a second selected tool that is usable in the improvement request process in a case where the improvement request process is determined to exist. Therefore, when changing a tool of one process of a machine program consisting of multiple machining processes, it is possible to appropriately change the tool for another process affected by the change.

With the machine program generation assisting method according to the second aspect, the computer according to the sixteenth aspect configured to execute the machine program generation assisting method according to the second aspect, the machine tool according to the seventeenth aspect, and the computer program according to the eighteenth aspect including instructions to cause a computer to execute the machine program generation assisting method according to the second aspect, and the computer-readable medium according to the nineteenth aspect, a computer is allowed to determining the existence of an improvement request process in which a first selected tool is unusable in the improvement request process due to the changing from the first assigned tool to the first selected tool unless the preset tool path of the second assigned tool assigned to the improvement request process among the assigned tools is changed. The computer is allowed to change a tool path of the second assigned tool, so that the first selected tool becomes usable in a case where the improvement request process is determined to exist. Therefore, when changing a tool of one process of a machine program consisting of multiple machining processes, it is possible to appropriately change the tool path for another process affected by the change.

With the machine program generation assisting method according to the third aspect, the computer according to the sixteenth aspect configured to execute the machine program generation assisting method according to the third aspect, the machine tool according to the seventeenth aspect, and the computer program according to the eighteenth aspect including instructions to cause a computer to execute the machine program generation assisting method according to the third aspect, and the computer-readable medium according to the nineteenth aspect, a computer is allowed to determine the existence of an improvement request process in which a second assigned tool assigned to the improvement request process among the assigned tools is unusable in the improvement request process due to the changing to the selected tool path. The computer is allowed to change a tool to be used in the improvement request process from the second assigned tool to a second selected tool that is usable in the improvement request process in a case where the improvement request process is determined to exist. Therefore, when changing a tool path of one process of a machine program consisting of multiple machining processes, it is possible to appropriately change the tool for another process affected by the change.

With the machine program generation assisting method according to the fourth aspect, the computer according to the sixteenth aspect configured to execute the machine program generation assisting method according to the fourth aspect, the machine tool according to the seventeenth aspect, and the computer program according to the eighteenth aspect including instructions to cause a computer to execute the machine program generation assisting method according to the fourth aspect, and the computer-readable medium according to the nineteenth aspect, because the tool that can be inserted into the insertion hole of the side surface enlarging process changes when a tool of the pre-machining process is changed, a useful machine program can be generated by setting the pre-machining process as the selected process and setting the side surface enlarging process as the improvement request process.

With the machine program generation assisting method according to the fifth aspect, the computer according to the sixteenth aspect configured to execute the machine program generation assisting method according to the fifth aspect, the machine tool according to the seventeenth aspect, and the computer program according to the eighteenth aspect including instructions to cause a computer to execute the machine program generation assisting method according to the fifth aspect, and the computer-readable medium according to the nineteenth aspect, when a size of the insertion hole formed by the tool in the pre-machining process is reduced, the tool that can be inserted into the insertion hole becomes smaller in the side surface enlarging process, and the second assigned tool set in advance becomes unusable. In such a case, it is further effective to set the side surface enlarging process as the improvement request process.

With the machine program generation assisting method according to the sixth aspect, the computer according to the sixteenth aspect configured to execute the machine program generation assisting method according to the sixth aspect, the machine tool according to the seventeenth aspect, and the computer program according to the eighteenth aspect including instructions to cause a computer to execute the machine program generation assisting method according to the sixth aspect, and the computer-readable medium according to the nineteenth aspect, the second selected tool can be used in the improvement request process because the second selected tool has a shape that can be inserted into the insertion hole.

With the machine program generation assisting method according to the seventh aspect, the computer according to the sixteenth aspect configured to execute the machine program generation assisting method according to the seventh aspect, the machine tool according to the seventeenth aspect, and the computer program according to the eighteenth aspect including instructions to cause a computer to execute the machine program generation assisting method according to the seventh aspect, and the computer-readable medium according to the nineteenth aspect, because the tool for forming an insertion hole that allows the tool to be inserted is changed when the tool for the side surface enlarging process is changed, a useful machine program can be generated by setting the side surface enlarging process as the selected process and setting the pre-machining process as the improvement request process.

With the machine program generation assisting method according to the eighth aspect, the computer according to the sixteenth aspect configured to execute the machine program generation assisting method according to the eighth aspect, the machine tool according to the seventeenth aspect, and the computer program according to the eighteenth aspect including instructions to cause a computer to execute the machine program generation assisting method according to the eighth aspect, and the computer-readable medium according to the nineteenth aspect, when the tool that can be inserted into the insertion hole in the side surface enlarging process is increased, the second assigned tool set in advance is unable to form an insertion hole capable of inserting the tool. Therefore, by the change of the tool of the side surface enlarging process, the insertion hole cannot exhibit a request function, and the second assigned tool cannot be used. In such a case, it is further effective to set the pre-machining process as the improvement request process.

With the machine program generation assisting method according to the ninth aspect, the computer according to the sixteenth aspect configured to execute the machine program generation assisting method according to the ninth aspect, the machine tool according to the seventeenth aspect, and the computer program according to the eighteenth aspect including instructions to cause a computer to execute the machine program generation assisting method according to the ninth aspect, and the computer-readable medium according to the nineteenth aspect, the insertion hole can exhibit a request function because there can be a change to the second selected tool usable for forming an insertion hole having a size that allows insertion of the first selected tool. Therefore, the second selected tool can be used in the improvement request process.

With the machine program generation assisting method according to the tenth aspect, the computer according to the sixteenth aspect configured to execute the machine program generation assisting method according to the tenth aspect, the machine tool according to the seventeenth aspect, and the computer program according to the eighteenth aspect including instructions to cause a computer to execute the machine program generation assisting method according to the tenth aspect, and the computer-readable medium according to the nineteenth aspect, it is advantageous when performing a series of machining processes by drilling a long hole with a drilling tool and widening the side surface of the hole with a turning tool or a grooving tool.

With the machine program generation assisting method according to the eleventh aspect, the computer according to the sixteenth aspect configured to execute the machine program generation assisting method according to the eleventh aspect, the machine tool according to the seventeenth aspect, and the computer program according to the eighteenth aspect including instructions to cause a computer to execute the machine program generation assisting method according to the eleventh aspect, and the computer-readable medium according to the nineteenth aspect, it is advantageous when performing a series of machining processes by forming a groove-shape insertion hole in a flat end surface or a curved side surface of a workpiece with a grooving tool and inserting a cutting tool into the insertion hole to increase the groove width. Further, it is advantageous when performing a series of machining processes by forming a groove-shape insertion hole with a grooving tool in a side surface of a hole drilled with a drilling tool and inserting a cutting tool into the insertion hole to increase the groove width.

With the machine program generation assisting method according to the twelfth aspect, the computer according to the sixteenth aspect configured to execute the machine program generation assisting method according to the twelfth aspect, the machine tool according to the seventeenth aspect, and the computer program according to the eighteenth aspect including instructions to cause a computer to execute the machine program generation assisting method according to the twelfth aspect, and the computer-readable medium according to the nineteenth aspect, the user can be visually recognized cutting shapes before and after the change because the first cutting shape cut off by the second assigned tool and the second cutting shape cut off by the second selected tool can be displayed on the display.

With the machine program generation assisting method according to the thirteenth aspect, the computer according to the sixteenth aspect configured to execute the machine program generation assisting method according to the thirteenth aspect, the machine tool according to the seventeenth aspect, and the computer program according to the eighteenth aspect including instructions to cause a computer to execute the machine program generation assisting method according to the thirteenth aspect, and the computer-readable medium according to the nineteenth aspect, searching for an improvement request process with a computer can be facilitated.

With the machine program generation assisting method according to the fourteenth aspect, the computer according to the sixteenth aspect configured to execute the machine program generation assisting method according to the fourteenth aspect, the machine tool according to the seventeenth aspect, and the computer program according to the eighteenth aspect including instructions to cause a computer to execute the machine program generation assisting method according to the fourteenth aspect, and the computer-readable medium according to the nineteenth aspect, it is possible to further generate a machine program in which the defects of the improvement request process are corrected.

With the machine program generation assisting method according to the fifteenth aspect, the computer according to the sixteenth aspect configured to execute the machine program generation assisting method according to the fifteenth aspect, the machine tool according to the seventeenth aspect, and the computer program according to the eighteenth aspect including instructions to cause a computer to execute the machine program generation assisting method according to the fifteenth aspect, and the computer-readable medium according to the nineteenth aspect, owing to the generation of the primary machine program, the defects of the improvement request process can be corrected by correcting the primary machine program. Further, it is also advantageous when the user desires to perform customization.

### EFFECT OF INVENTION

The technique disclosed in the present application allows, for example, a tool to be appropriately changed with respect to another process affected by the change of tools in the case of changing a tool of one process of a machine program consisting of multiple machining processes.

### BRIEF DESCRIPTION OF THE DRAWINGS

FIG. 1 is a diagram illustrating a schematic configuration of a machine tool and a system including a computer for generating a machine program for the machine tool according to an embodiment.
FIG. 2 is a hardware block diagram of a controller.
FIG. 3 is a hardware block diagram of the computer.
FIG. 4 is an example of a primary machine program.
FIG. 5 is an example of an image representing a machining shape machined by the primary machine program.
FIG. 6 is an example of tool information for a turning drill.
FIG. 7 is a diagram for explaining the shape of the turning drill and the shape to be cut by the turning drill.
FIG. 8 is an example of the tool information of the turning tool.
FIG. 9 is a diagram for explaining the shape of the turning tool and a cutting shape.
FIG. 10 is an example of an editing window of the primary machine program.
FIG. 11 is an example of correspondence relation data.
FIG. 12 is an example of a secondary machine program.
FIG. 13 is an example of an image representing a machine shape that is machined by the secondary machine program.
FIG. 14 is another example of a primary machine program.
FIG. 15 is a diagram for explaining the cutting shape by the program of FIG. 14 and the shape of a grooving tool.
FIG. 16 is an example of tool information of the grooving tool.
FIG. 17 is another example of a secondary machine program.
FIG. 18 is a flowchart relating to a machine program generation assisting method.
FIG. 19 is a flowchart illustrating a detailed process flow of process S3 of FIG. 18.
FIG. 20 is a flowchart illustrating a detailed process flow of process S10 of FIG. 19.
FIG. 21 is a flowchart relating to a machine program generation assisting method continuing from the process illustrated in FIG. 20.
FIG. 22 is a flowchart relating to a machine program generation assisting method continuing from the process illustrated in FIG. 21.
FIG. 23 is a flowchart relating to a machine program generation assisting method continuing from the process illustrated in FIG. 21.
FIG. 24 is a flowchart relating to a machine program generation assisting method continuing from the process illustrated in FIG. 20.
FIG. 25 is a flowchart relating to a machine program generation assisting method continuing from the process illustrated in FIG. 24.

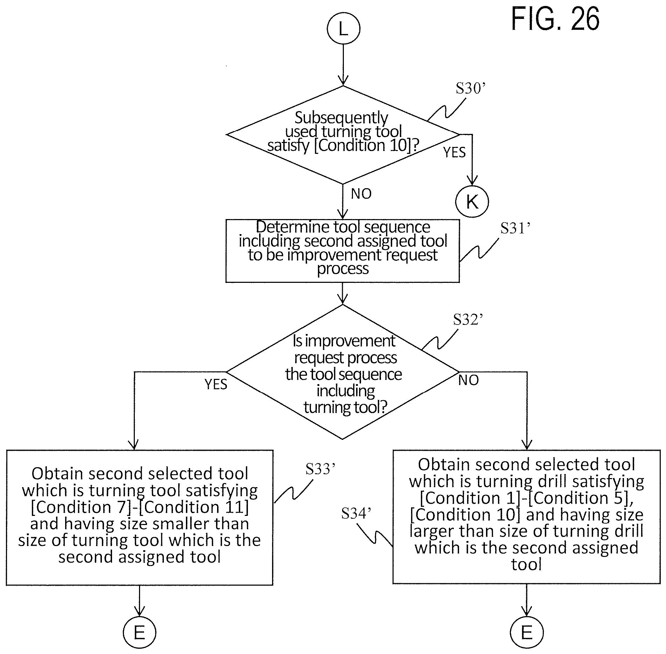

FIG. 26 is a flowchart relating to a machine program generation assisting method continuing from the process illustrated in FIG. 25.
FIG. 27 is a flowchart relating to a machine program generation assisting method continuing from the process illustrated in FIG. 25.

### DETAILED DESCRIPTION OF INVENTION

The present invention will now be described with reference to the accompanying drawings. In the drawings, like reference numerals designate corresponding or identical elements throughout the various drawings.

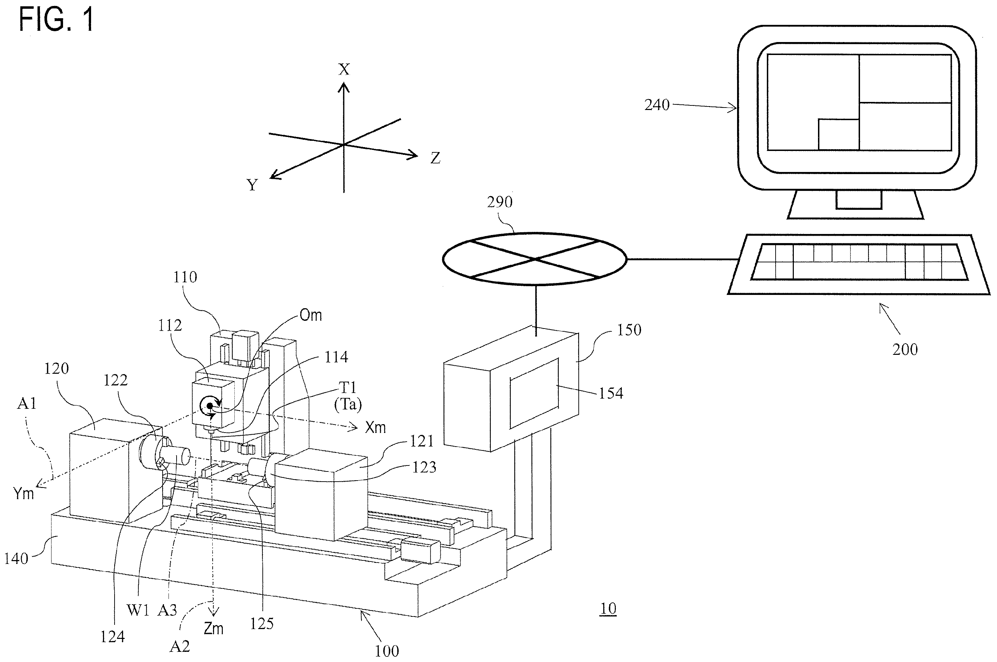

FIG. 1 shows a schematic configuration of a system 10 according to an embodiment of the present invention. The system 10 includes a machine tool 100, a computer 200, and a network 290. The network 290 connects the machine tool 100 and the computer 200 to each other. The network 290 is, for example, a LAN (local area network) provided in a factory. Although the network 290 illustrated is a wired network, the network 290 may be a wireless network. It is to be noted that as illustrated in FIG. 1, the X axis is along the height direction of the machine tool 100, the Y axis is along the depth direction of the machine tool 100, and the Z axis is along the width direction of the machine tool 100. This embodiment is in accordance with a JIS standard in that the Z axis is an axis parallel to rotation axis A3 of a first spindle 122, which holds a workpiece. In this embodiment, this coordinate system will be referred to as workpiece coordinate system.

The machine tool 100 performs machining on a workpiece W1. The machining includes at least one of turning, milling, drilling, threading, reaming, and boring. As illustrated in FIG. 1, the machine tool 100 includes a column 110, a first headstock 120, and a second headstock 121. The column 110, the first headstock 120, and the second headstock 121 are provided on a base 140.

The column 110 is movable in the Y axis direction and the Z axis direction on the base 140. A tool headstock 112 is mounted on the column 110. The tool headstock 112 is movable in the X axis direction relative to the column 110. The tool headstock 112 is swingable, relative to the column 110, about a swinging axis A1, which is along the Y axis direction. A tool spindle 114 is mounted on the tool headstock 112. The tool spindle 114 is rotatable about a rotation axis A2 relative to the tool headstock 112. The rotation axis A2 is orthogonal to the swinging axis A1. The tool spindle 114 is holding a tool Ta, which is a machining tool. As used herein, the term "machining tool" is a concept that encompasses a turning tool, a milling tool, a drilling tool, a grooving tool, a threading tool, a reaming tool, and a boring tool. The machine tool 100 further includes a tool exchanger (not illustrated) that exchanges the tool Ta with another tool. The tool Ta is exchanged as necessary, that is, based on the kind of machining performed on the workpiece W1.

In this embodiment, the intersection of the axis A1 and the axis A2 is referred to as a mechanical home Om, the rotation axis A2 as Zm axis, the pivot axis A1 as Ym axis, Zm axis and Ym axis a coordinate system with an axis perpendicular to each other as Xm axis is referred to as a mechanical coordinate system. The direction from the mechanical home position Om toward the end of the first tool T1 shall be the positive direction of Zm shaft. The positive direction of the X-axis of the work coordinate system when the X-axis of the work coordinate system is rotated around the Y-axis so that the positive direction of the Z-axis of the work coordinate system is toward the same direction as the positive direction of Zm axis of the machine coordinate system, Xm axis of the machine coordinate system the positive direction. The positive direction of the Y-axis of the work coordinate system shall be the positive direction of Ym axis of the mechanical coordinate system.

The first headstock 120 is fixed on the base 140. The first headstock 120 includes a first spindle 122. The first spindle 122 is rotatable around the rotation axis A3. The rotation axis A3 is along the Z-axis. The first spindle 122 includes a first chuck 124. The first chuck 124 grasps the first end of the workpiece W1. The second headstock 121 is movably provided in a direction parallel to the Z-axis direction on the base 140. The second headstock 121 includes a second main shaft 123. The second main shaft 123 is rotatable about the rotation axis A3. The second main shaft 123 includes a second chuck 125. The second chuck 125 grips the second end of the workpiece W1 Z-axis-opposite to the first end of the workpiece W1. When the machine tool 100 processes the second end of the workpiece W1, the workpiece W1 is gripped by the first chuck 124. When the machine tool 100 processes the first end of the workpiece W1, the workpiece W1 is grasped by the second chuck 125.

Machine tool 100 includes a controller 150 for controlling rotation about each axis of rotation, rotation about each axis of rotation, and movement about each axis of rotation. The controller 150 is connected to the base 140. Here, the controller 150 may be connected to other places of the machine tool 100, if it is possible to receive the transmission and detection result of the control signal, may be installed separately from the base 140. The controller 150 is generally referred to as a computer numerical control (Computer Numerical Control: CNC) device. That is, the controller 150 is a type of computer.

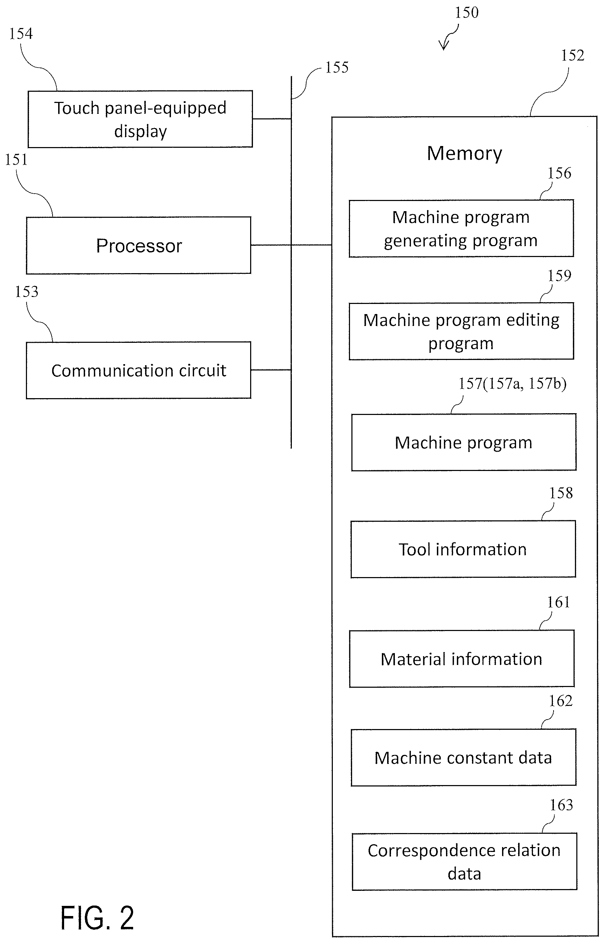

FIG. 2 is a hardware block diagram of the controller 150. As illustrated in FIG. 2, the controller 150 includes a processor 151, a memory 152, a communication circuit 153, and a display 154 with a touch panel. The processor 151, the memory 152, the communication circuit 153, and the display with touch panel 154 are connected to each other through the bus 155. The memory 152 stores the program necessary for processing, the program for editing the processing program, and the data necessary for them. The processor 151 reads the program stored in the memory 152 and executes the read program. Thus, each function of the controller 150 is realized. Each function the controller 150 implements includes control of the execution of the cutting process. Specifically, the memory 152 stores the machine program 157. The machine program 157 includes a control command for executing the cutting operation. Normally, the processing program 157 is edited in the computer 200, transmitted to the controller 150 through the network 290, and stored in the memory 152. The communication circuit 153 includes a function for converting communication packets into data for communication with the computer 200 via the network 290, a function for converting data into communication packets, and a function for transmitting and receiving communication packets.

In this embodiment, the memory 152 stores tool information 158 of the tool Ta that can be mounted on the machine tool 100. The tool information 158, T number corresponding to the tool Ta (T number), the name of the tool Ta, the material of the tool Ta, the properties of the tool Ta blades (characteristics), and the use of the tool Ta conditions (wear conditions) include. The properties of the blade of the tool Ta, the nominal diameter of the tool Ta, the tool length (tool length), the tool diameter (tool diameter), the axial offset (axial offset), the radial offset (radial offset), the number of blades, the cutting-edge width, the radius of curvature of the arc defining the cutting-edge shape (radius of curvature of the cutting-edge) R, indexing angle of the blade (indexing angle), effective main shaft rotational direction, and, including the orientation of the blade.

Tool length is the length of the tool Ta oriented (hereinafter referred to as axial) along A2 of the rotation axis with no wear (new) tool Ta is attached to the tool spindle 114. In other words, the tool length is Zm axial length of the tool Ta in the mechanical coordinate system. The tool diameter is the diameter of the tool Ta oriented perpendicular to A2 of the rotation axis when the (new) tool Ta without wear is attached to the tool spindle 114 (hereinafter referred to as radial). Axial offset is the axial distance from the proximal point of the tool Ta to the cutting-edge (tool tip) of the tool Ta when a wear-free (new) tool Ta is mounted on the tool spindle 114. The proximal end point of the tool Ta is an end point belonging to the part of the tool Ta gripped by the tool spindle 114 out of two axial end points of the tool Ta while the tool Ta is attached to the tool spindle 114. In other words, the axial offset is Zm axial distance from the proximal end of the tool Ta to the cutting-edge in the mechanical coordinate system. The radial offset is the co-ordinate in the radial direction from the proximal point of the tool Ta to the cutting-edge of the tool Ta when the (new) tool Ta without wear is attached to the tool spindle 114. This coordinate value, when the tool spindle stock 112 is the attitude illustrated in FIG. 1, the value of Xm coordinate of the cutting-edge of the tool Ta while the tool Ta is attached to the tool spindle 114.

The indexing angle of the blade indicates whether the cutting-edge of the turning tool is directed toward the first spindle 122 or the second spindle 123. If the indexing angle is 0 degrees, the cutting-edge of the turning tool is directed toward the first spindle 122. If the indexing angle is 180 degrees, the cutting-edge of the turning tool is directed toward the second spindle 123. The effective spindle rotation direction refers to the effective rotation direction (clockwise or counterclockwise) of the spindle when the spindle to which the turning tool is directed is viewed from the turning tool. The orientation of the blade indicates whether the turning tool is left-hand (left-handed) or righthand (right-handed).

The memory 152 further includes material information 161 and machine-constant (machine constant) data 162. Material information 161, the workpiece W1 to be processed (workpiece (workpiece) W1) reference information of the material to be processed (name, ID, etc.), the shape (outer diameter, inner diameter (if the hole is vacant), length), and, including the properties (specific cutting resistance x (kg/mm2). Machine constant data 162 is a machine tool 100 specific parameter used in the calculation of cutting conditions. Machine parameter data 162 is, for example, mechanical efficiency η, machine horsepower HP(HP, machining limitation (finishing allowance). The tool information 158 is transmitted by the communication circuit 153 to the computer 200 via the network 290. The tool information 158 and the material information 161 are read from the memory 152 when the below-described machine program generating program 156 or the machine program editing program 159 is executed. The memory 152 may store a machine program generating program 156 for generating the machine program 157 and a machine program editing program 159 for editing the generated machine program 157. The machine program generating program 156 has a function equivalent to that of the machine program generating program 156 described in International Publication WO 2021/014571. Description of the functions of the machine program generating program 156 independent of this embodiment is omitted. However, the functions of the machine program generating program 156 described in International Publication WO 2021/014571 may be referred to for reference (Incorporation by Reference). In the following embodiments, the machine program 157 generated by the machine program generating program 156 is referred to as a primary machine program 157a. The machine program editing program 159 is a program for generating a secondary machine program 157b by changing the primary machine program 157a. The functions of the machine program editing program 159 will be described below.

The touch panel-equipped display 154 may be a single display 154 or may be a combination of multiple displays. It is to be noted that the "display" of the touch panel-equipped display 154 is a display example, and the "touch panel" of the touch panel-equipped display 154 is an interface example. It is also to be noted that the touch panel-equipped display 154 may be substituted with a combination of: a display without a touch panel; and input devices provided around the display, examples including buttons, switches, a lever, and a pointing device. In this case, the input devices are interface examples.

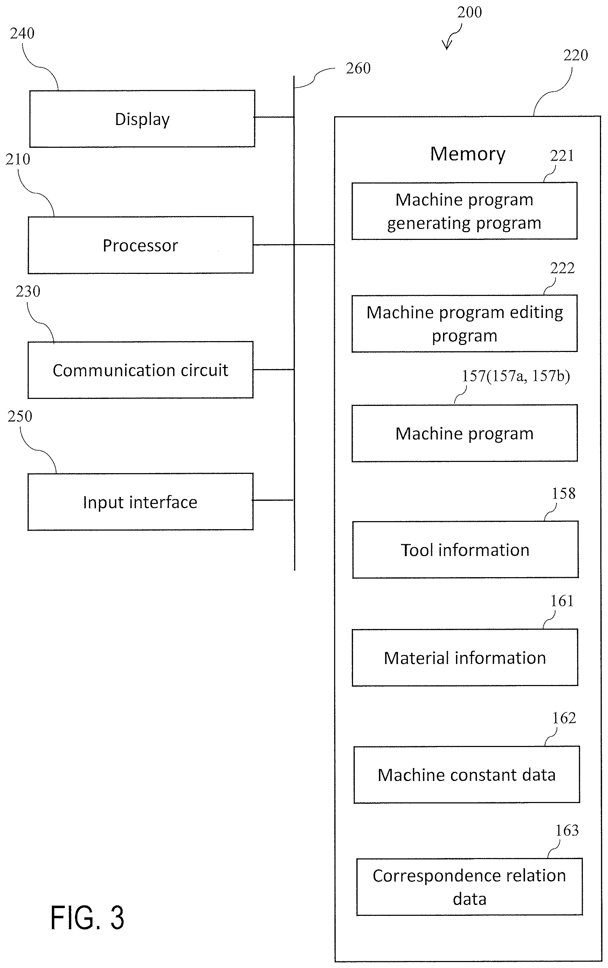

FIG. 3 is a hardware block diagram of the computer 200. As illustrated in FIG. 3, the computer 200 includes a processor 210, a memory 220, a communication circuit 230, a display 240, and an input interface 250. The processor 210, the memory 220, the communication circuit 230, the display 240, and the input interface 250 are connected to each other via a bus 260. The input interface 250 is an interface example. For example, the input interface 250 is a pointing device such as a keyboard and a mouse. It is to be noted that the computer 200 may be a combination in which the display 240 and the input interface 250 are integral to each other.

The memory 220 stores the machine program 157, the tool information 158, the material information 161, a machine program generating program 221, a machine program editing program 222, and a program such as an operating system. The machine program generating program 221 has substantially the same functions as the machine program generating program 156. The machine program editing program 222 has substantially the same functions as the machine program editing program 159. It is to be noted, however, that the screen display method of displaying the machine program editing program 222 may be partially different from the screen display method of displaying the machine program editing program 159. The processor 210 reads a program stored in the memory 220 and executes the program that has been read. The communication circuit 230 has functions necessary for communicating with the computer 200 via the network 290; specifically, a function of converting a communication packet into data, a function of converting data into a communication packet, and a function of transmitting and receiving communication packets.

The computer 200 can use the communication circuit 230 to transmit the primary machine program 157a generated by using the machine program generating program 221 and the secondary machine program 157b generated by using the machine program editing program 222 to the controller 150. In addition, the computer 200 can receive the latest tool information 158 from the controller 150 and update the tool information 158 in the memory 220 using the communication circuit 230 when the machine program generating program 221 or the machine program editing program 222 is executed.

Next, details of the machine program 157 that is common among the primary machine program 157a and the secondary machine program 157b is described. In this embodiment, the machine program 157 is described in a program code for numerical control of the machine tool 100. In the machine program 157, at least the following units are defined.
(1) Common unit: Material and shape of the workpiece W1.
(2) Basic coordinate unit: Method of setting the workpiece coordinate system and the machine coordinate system.
(3) Machining unit: Machining methods and/or machined shapes of parts of final machined shape. The common unit, the basic coordinate unit, and the machining unit each have a unit number. The machining unit includes: unit data including information for identifying machining content; a tool sequence for setting tools Ta and cutting conditions for the tools Ta; and a shape sequence specifying a machined shape obtained by the machining in the machining unit. As used herein, the term "tool sequence" is intended to mean a series of machining stages necessary for forming a machined shape of a part specified by the machining unit (such as one bar material and one thread ridge). That is, a series of stages for forming one shape, including rough processing and finishing processing performed while exchanging tools.) (For example, in the case of hole machining, the series of stages include: spotting; rough processing associated with making a hole using drills in such an order that the tool diameters of the drills gradually become larger; and finishing processing such as reaming.) (For further example, in the case of threading, the series of stages include spotting, prepared hole processing, and tapping.) As used herein, the term "shape sequence" is intended to mean an aggregation of segments defined by parameters for determining a machined shape, such as: a start point and an end point of the cutting-edge of a tool in the workpiece coordinate system; and a connection relationship indicating how the start point and the end point are connected to each other (such as by way of a line or an arc). It is to be noted, however, that the thread pitch in the threading (tapping) is included in the unit data of the machining unit. In this embodiment, a machining stage in which one tool in the tool sequence is used will be referred to as machining process, which will be described below.

The machine program 157 specifies: at least one tool Ta used in machining work, and at least one machining process in the machining work performed using the at least one tool Ta. Typically, the machine program 157 mayhave at least one machining process. However, this embodiment is aimed at a machine program 157 having multiple machining processes. The machining process defines: the tool Ta for implementing the process in the machining stage; and cutting conditions for the tool Ta. The cutting conditions for the tool Ta include: machining speed Vc, cutting amount of the tool Ta relative to the workpiece W1; and feed speed of the workpiece W1. The machining speed Vc (m/min) is obtained from the equation Vc = π × D × nw/1000, where nw denotes spindle rotational speed (min⁻¹), and D denotes workpiece diameter (mm). In this embodiment, the term "feed speed" is intended to mean feed per revolution f (mm/rev) of a spindle. Parameters defining the machining process include: information for identifying the stage of the machining process (such as rough processing, finishing processing, spotting, prepared hole processing, and tapping); and number indicating the order in which the machining process is performed in the machining unit to which the machining process belongs. For example, assume that the machine program 157 defines: number 1 as rough processing performed as the machining process in the tool sequence; and number 2 as finishing processing performed as the machining process. Under this assumption, the rough processing as the machining process is performed first, and then the finishing processing as the machining process is performed. Further, the tool Ta and the cutting conditions for the tool Ta defined in the machining process are applied to the entire shape sequence in the same machining unit.

### <Outline of machine program generating program>

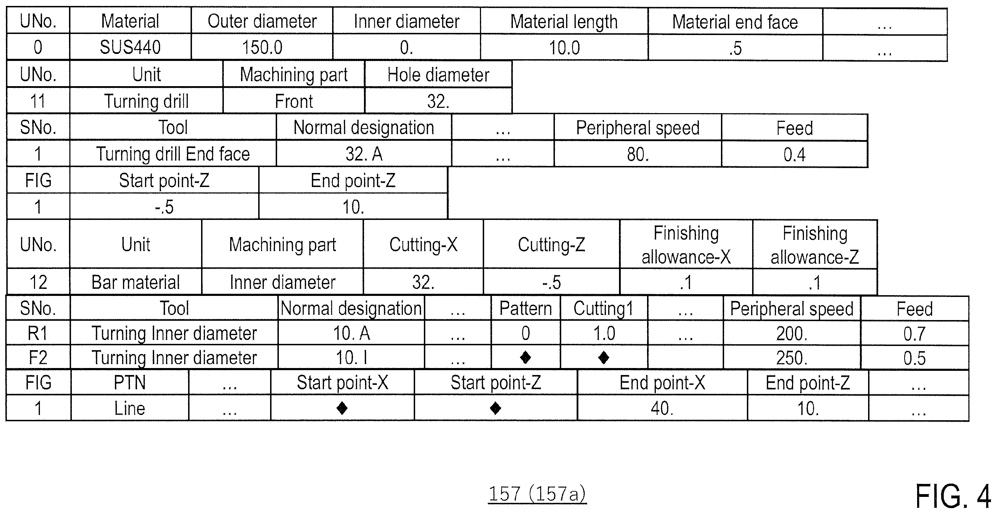

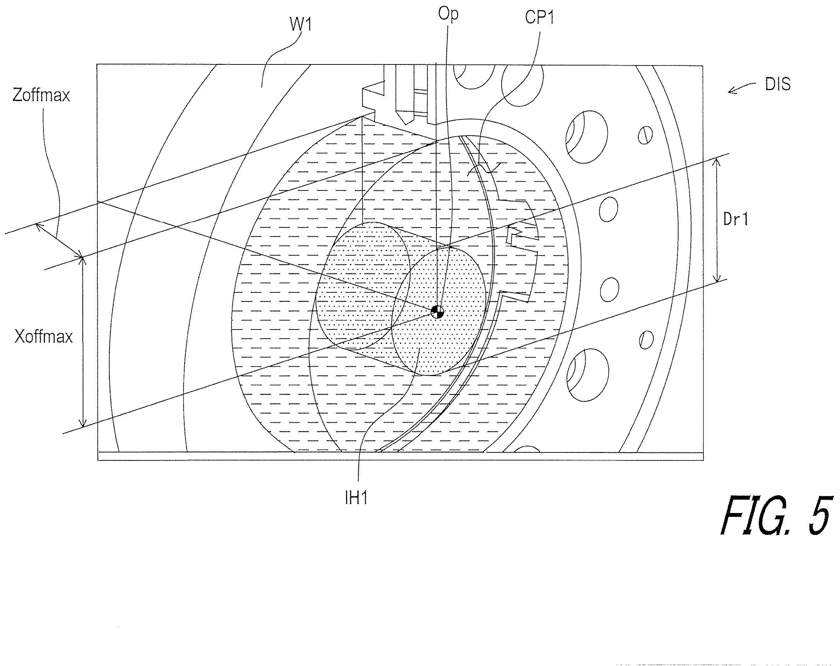

The controller 150 for executing the machine program generating program 156 and the computer 200 for executing the machine program generating program 221 (hereinafter, these devices are referred to as a machine program generating computer) input a three-dimensional model of a workpiece W1 and a three-dimensional model of a target (a product or a component in the product), set a machined surface from the differences between these three-dimensional models, classify, select the optimum tool Ta based on the machined surface, and generate a machining unit using the tool Ta. That is, the machine program generating computer associates assigned tools with the tools Ta to be used respectively in the machining processes. The machining unit includes parameters (described in detail below) and tool sequences representing patterns that specify the tool paths of the assigned tools. Therefore, the machine program generating computer sets a preset tool path to the tool path of each of the assigned tools. The machine program generating computer generates the primary machine program 157a for performing machining by using the assigned tools in the machining processes. FIG. 4 is an example of the primary machine program 157a of the machine program generating program 156. FIG. 5 is an example of an image representing a machined shape that is machined by the primary machine program 157a.

The unit number (UNo.) 0 in FIG. 4 indicates a common unit. The unit number (UNo.) 11 indicates a machining unit using a turning drill. The unit number (UNo.) 12 indicates a machining unit for machining the sides of a hole machined by a turning drill. Hereinafter, the machining unit having unit number 11 is referred to as a turning drill machining unit, and the machining unit having the unit number 12 is referred to as a bar inner diameter machining unit. The turning drill unit includes a tool sequence having sequence number (SNo.) 1 and a shape sequence consisting of a start point-Z and an end point-Z of FIG.1. The bar inner diameter machining unit includes a tool sequence having a sequence number (SNo.) R1, a tool sequence having a sequence number (SNo.) F2, and a shape sequence representing the line pattern of FIG 1. In the machine program of FIG. 4, the display of the basic coordinate unit and the machining unit other than that described above are omitted for the sake of explanation.

The turning drill unit includes machining unit parameters and hole diameter parameters, which are commonly used for tool sequences and shape sequences, between unit number (UNo.) and sequence number (SNo.). The machining unit parameters are parameters for setting whether to machine the face of either the flat face on the right side of the workpiece W1 or the flat face on the left side of the workpiece W1. The hole diameter parameter is the parameter that specifies the nominal diameter of the drill. It is to be noted that Dr1 of FIG. 5 corresponds to the nominal diameter of the turning drill.

The tool sequence of the turning drill unit includes, for example, tool parameters, normal designation parameters, peripheral speed parameters and feed parameters. The tool parameter specifies a turning drill for face machining. Normal designation parameters include a nominal diameter ("32.0") and a suffix ("A"). The suffix is used to distinguish each of multiple tools with the same nominal diameter in tools with the same tool parameter. The peripheral speed parameter represents the rotational speed of the first spindle 122 that holds the workpiece W1. It is also possible to rotate the tool spindle 114 by fixing the first spindle 122. In this case, a parameter other than that of the peripheral speed parameter is set. The feed parameter indicates the moving speed when the turning drill is linearly moved in the Z-axis direction.

The shape sequence of the turning drill machining unit includes parameters such as the turning start point (start point-Z) and the cutting end point (end point-Z) of the Z-coordinate. Thus, the tool path at the end of the turning drill moves from the machine origin to (0,0, start-Z) of the work coordinate system, moves linearly from (0,0, start-Z) to (0,0, end-Z), moves linearly from (0,0, end-Z) to (0,0, start-Z). Then, the tool path that moves back and forth from (0,0, start-Z) of the work coordinate system to the machine origin is set as the preset tool path. FIG. 5 illustrates that the point O_{P} is the origin of the work coordinate system. The coordinate values specified in the shape sequence are coordinates based on the origin O_{P} of the work coordinate system. Zoffmax of FIG.5 indicates the amount of movement of the turning drill in the Z-axis direction (the difference between the value of the end point-Z and the value of the start point-Z). The area IH1 indicated with dot patterns is the area to be cut by the turning drill.

The bar inner diameter machining unit includes parameters that are commonly used by both the tool sequence and the shape sequence and provided between the unit number (UNo.) and the sequence number (SNo.). The parameters are, for example, the X-coordinate of the cutting start point (coordinate value that is half of the cutting-X), Z-coordinate of the cutting start point (cutting-Z), cutting allowance (finishing allowance-X) in finishing processing, and cutting allowance (finishing allowance-Z) in finishing machining. The tool sequence having the sequence number R1 defines, for example, the tool for rough processing. Hereinafter, the tool sequence having the sequence number R1 is referred to as the tool sequence for rough processing. In addition to having the parameters of the tool sequence of the turning drill machining unit, the tool sequence having the sequence number R1 also has a pattern parameter and a notch 1 parameter. The cutting 1 parameter represents the maximum amount of cutting in the X-axis direction in one stroke. If the cutting depth in the X-axis direction is greater than the length of the cutting 1 parameter, the cutting by the machine tool 100 is divided into multiple strokes. The pattern parameter defines the tool path for each stroke. In this example, the tool path, which is to be set as the preset tool path, includes moving the cutting-edge to the cutting start point in one stroke, then cutting the workpiece W1 at a cutting depth within the cutting 1 parameter by moving the cutting-edge in the X-axis direction, then moving the cutting-edge in the X-axis direction, then moving the cutting-edge away from the workpiece W1 and returning to the cutting start point by moving the cutting-edge in the X-axis direction upon the time when the cutting-edge moves to another end in the Z-axis direction. In addition, various tool paths other than this tool path may be set in the preset tool path. The tool sequence having the sequence number F2 defines the tools, etc. for finishing processing. Hereinafter, the tool sequence having the sequence number F2 is referred to as a tool sequence for finishing processing. In the tool sequence having the sequence number F2, the pattern parameter and the notch 1 parameter are not set. The machine tool 100 automatically sets the depth of cut in the X-axis direction suitable for finishing and the tool path for finishing. The shape sequence specifies the X coordinate (end point-X/2) of the machining end point and the Z coordinate (end point-Z) of the machining end point. The area CP1 indicated by hatching using broken lines in FIG. 5 represents the area to be machined in the bar inner diameter machining unit. Xoffmax corresponds to the endpoint-X/2 and is equal to the radius of the machined hole of the product-shape.

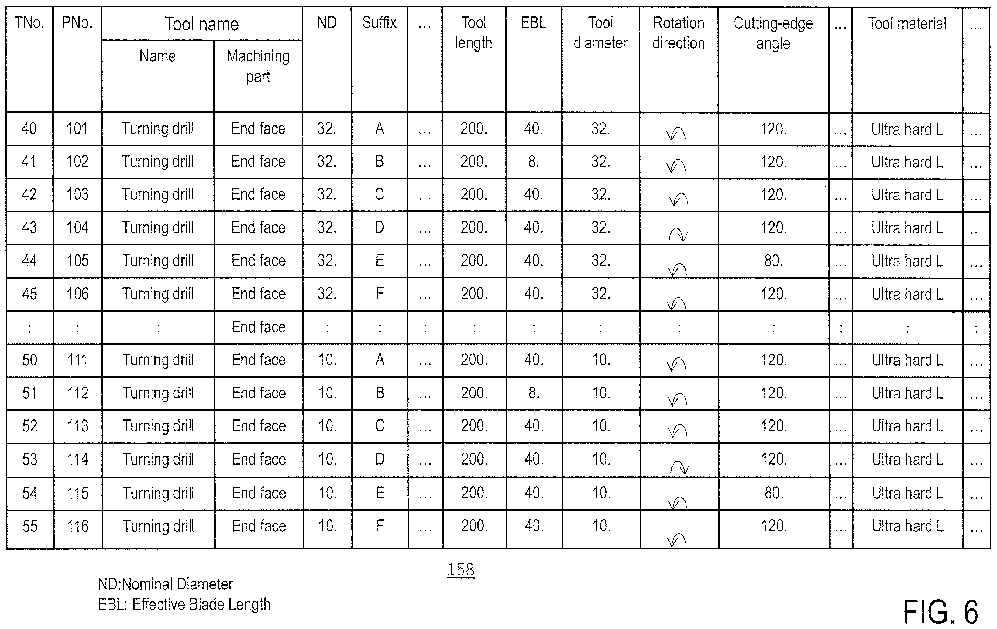

The machine program generating computer sets the tool to be set in the tool sequence of the turning drill machining unit as the optimum tool for machining. FIG. 6 is an example of tool information 158 for a turning drill. As illustrated in FIG. 6, the tool information 158 of the turning drill has a T number (TNo.), a pocket number (PNo.), a tool name (name + machining part), and a normal designation + suffix. Further, the tool information serving as the parameters (dimensions) of the tools corresponding to these include tool length, tool diameter, rotation direction, edge angle, tool material, and effective blade length.

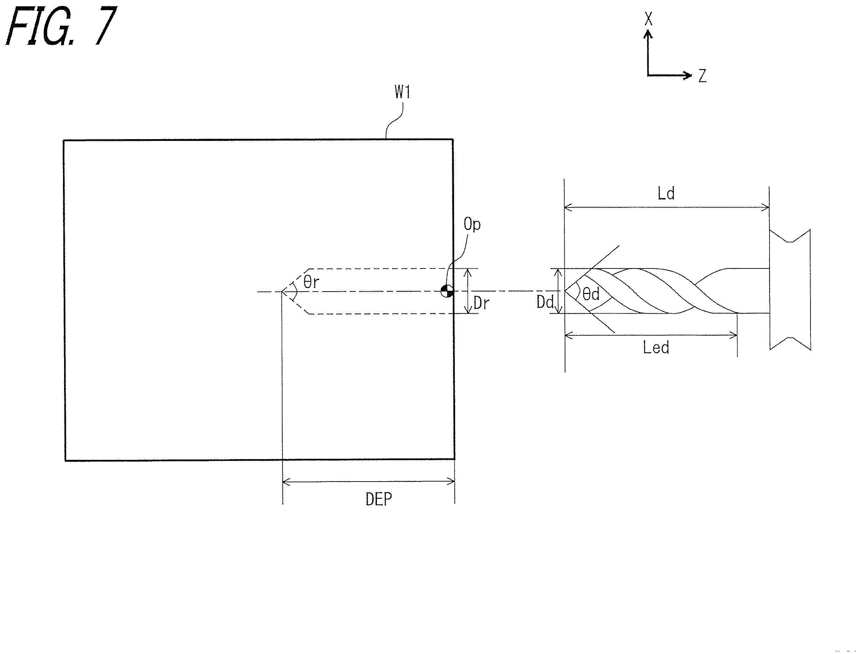

FIG. 7 is a diagram for explaining the shape of the turning drill and the cutting shape. Referring to FIG. 7, the tool length corresponds to the longitudinal length Ld of the tool. The tool diameter corresponds to the diameter Dd of the tool. The rotation direction is a parameter that represents whether it is appropriate to rotate the workpiece W1 with the first spindle 122 in the clockwise or counterclockwise direction when viewing the workpiece W1 from the other side of the first chuck 124. In addition, the rotation direction also represents whether it is appropriate to move the turning drill left or right with respect to the workpiece W1. The blade edge angle is an angle represented by the angle θd in FIG.7. The tool material represents the material of the turning drill. The effective blade length corresponds to Led.

The machine program generating computer, for example, may select and set the optimum turning drill based on the following [Condition 1] to [Condition 6].
[Condition 1] The material of the tool is a material that can machine the workpiece W1.
[Condition 2] The rotation direction matches with the rotation settings of the first main spindle 122/second main spindle 123 and the traveling direction of the tool.
[Condition 3] The tool length Ld is larger than the machining depth DEP.
[Condition 4] The effective blade length Led is larger than the machining depth DEP.
[Condition 5] The cutting-edge angle θd is equal to the tip angle θr in a case where the tip angle θr of tip part of the cutting shape is defined.
[Condition 6] The tool diameter Dd is the maximum usable diameter of the turning drill in a case where the tool diameter Dd is equal to the machining diameter Dr or the machining diameter Dr is larger than the usable maximum diameter of the turning drill.

The machine program generating computer selects a turning drill with 32.A designation of T number 40 having the largest tool diameter so as to satisfy such conditions.

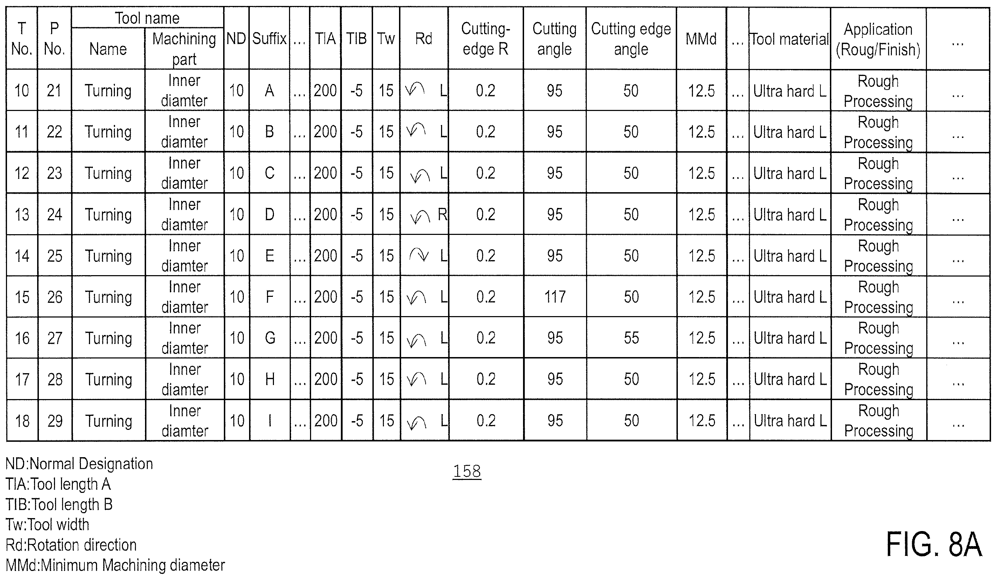

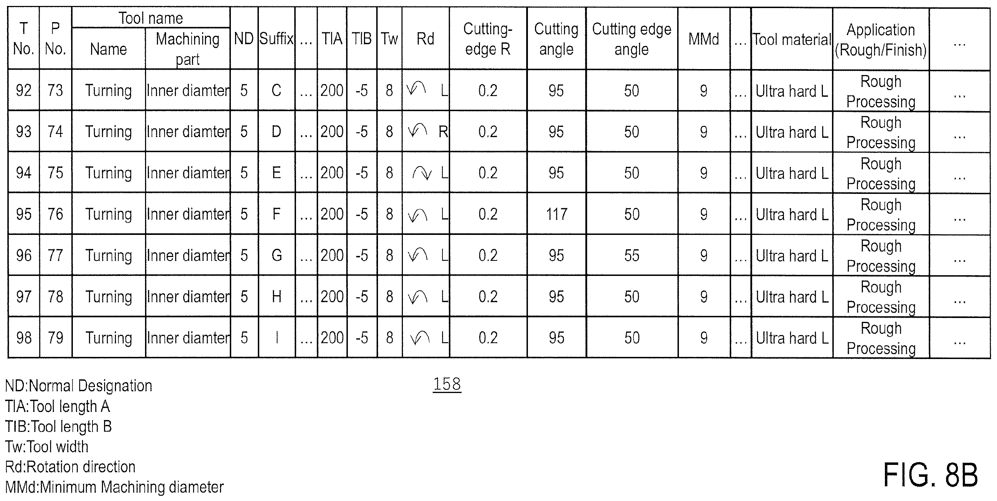

The machine program generating computer sets the tool to be set in the tool sequence of the bar inner diameter machining unit as the optimum turning tool for machining. FIG. 8 is an example of tool information 158 for a turning tool. As illustrated in FIG. 8, the tool information 158 of the turning tool includes a T number (TNo.), a pocket number (PNo.), a tool name (name + machining part), and a normal designation + suffix. Further, the tool information includes parameters (dimensions) corresponding to these items such as the tool length A, the tool length B, the tool width, the rotation direction, the cutting-edge R, the cutting angle, the cutting-edge angle, the minimum machining diameter, the tool material, and the application (rough/finish). Among these parameters, the parameters different from the parameters of the turning drill are mainly described below.

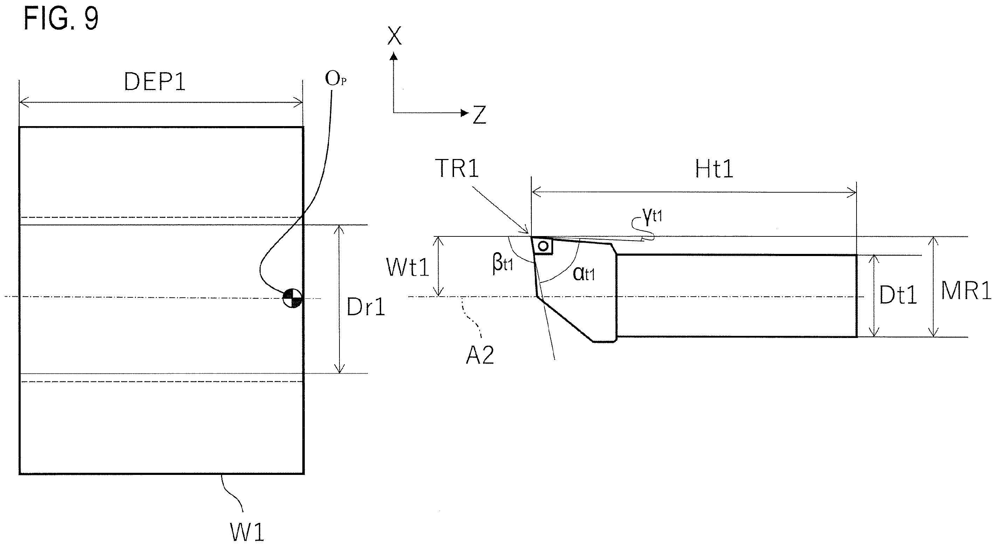

FIG. 9 is a diagram for explaining the shape of the turning drill and the cutting shape. Referring to FIG. 9, the tool length A corresponds to the tool protrusion Ht1 of FIG. 9. As illustrated in FIG.9, the tool length B corresponds to the distance Wt1 between the rotation axis A2 and the cutting-edge in the X-axis direction. The tool width corresponds to the diameter Dt1 of the neck part of the tool illustrated in FIG. 9. The rotation direction is the same as that of a turning drill. The cutting-edge R is the radius of curvature TR1 of the cutting-edge. The cutting angle corresponds to the angle βₜ₁ of FIG. 9. The cutting-edge angle corresponds to the angle αₜ₁ of FIG. 9. In the following embodiments, γₜ₁=180°-αₜ₁-βₜ₁ is referred to as the minor cutting angle. The minimum machining diameter MR1 corresponds to a value that is substantially the same as the sum of the tool length B (Wt1) and the half of the tool width (Dt1/2).

The machine program generating computer may, for example, select and set the optimum turning tool based on the following [Condition 7] to [Condition 11].
[Condition 7] The material of the tool is a material that can machine the workpiece W1.
[Condition 8] The rotation direction matches with the rotation setting of the first spindle 122/second spindle 123 and the traveling direction of the tool.
[Condition 9] The tool length A (Ht1) is larger than the machining depth DEP1.
[Condition 10] The minimum machining diameter MR1 is smaller than the machining diameter Dr1. It is to be noted that Dr1=Dd.
[Condition 11] It matches the purpose of rough machining and finishing processing on the program.

The machine program generating computer selects a tool whose designation T number is 10.A and satisfies the conditions for rough processing of the bar inner diameter machining unit as the tool of the tool sequence for rough processing. The machine program generating computer selects a tool whose designation T number is 10.I and satisfies the conditions for finishing processing of the bar inner diameter machining unit as the tool of the tool sequencing for finishing processing.

### <Outline of machine program editing program>

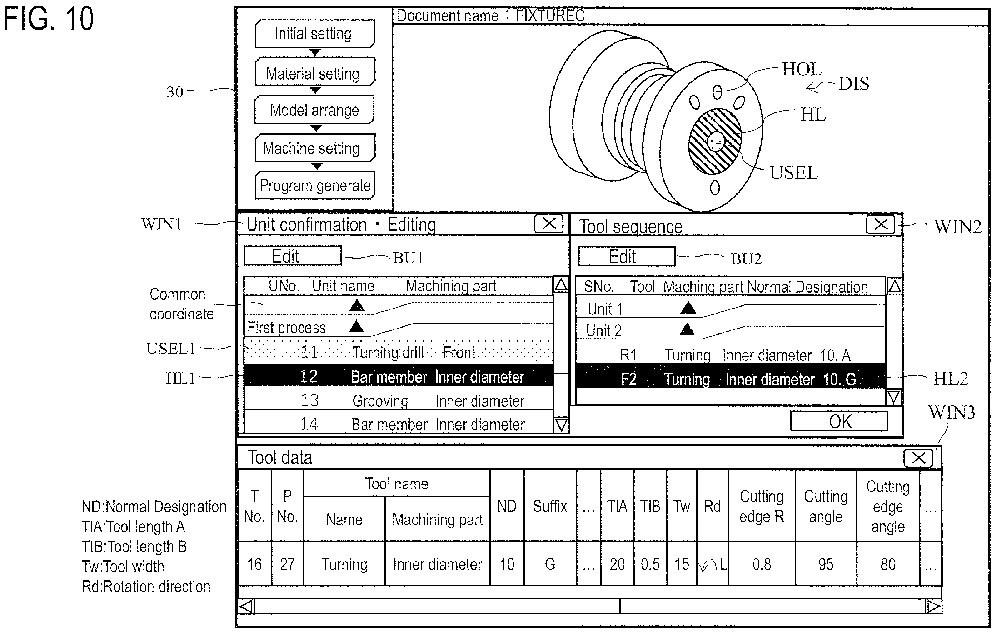

The controller 150 for executing a machine program editing program 159 and the computer 200 for executing a machine program editing program 222 (hereinafter, these devices are referred to as machine program editing computers) analyze the primary machine program 157a, calculate each cutting shape to be cut off by each tool, and display each cutting shape on the display 154 (240). FIG. 10 is an example of an editing window 30 of a primary machine program 157a displayed by a machine program editing computer. The edit window 30 includes, for example, a CG display window DIS, a unit selection window WIN1, a tool sequence selection window WIN2, and a tool information display window WIN3. Although the edit window 30 may further include a shape sequence display window, the description of the shape sequence display window is omitted. In FIG. 10, the displays of the unit selection window WIN1, the tool sequence selection window WIN2, and the tool information display window WIN3 are mere examples. Some windows may may be combined. The unit selection window WIN1 and the tool sequence selection window WIN2 may be omitted. It is to be noted that FIG. 5 is an example illustrating an enlarged display of the CG display window DIS.

With the CG display window DIS, in a case where the respective cutting shapes (hereinafter referred to as cutting parts) to be cut out by the respective tools are selected, the machining unit corresponding to the cutting part is highlighted in the unit selection window WIN1, and the tool sequence included in the machining unit highlighted in the unit selection window WIN1 is displayed in the tool sequence selection window WIN2. When one tool sequence is selected in the tool sequence selection window WIN2 in a case where a selected machining unit includes multiple tool sequences, the tool information of the tool specified in the selected tool sequence is displayed in the tool information display window WIN3. In the example of FIG. 10, the selected part HL corresponding to the bar inner diameter machining unit is selected and highlighted, and the bar inner diameter machining unit corresponding to the selected part HL is displayed by the highlight HL1. In the tool sequence selection window WIN2, the tool sequence of the finishing processing is selected and displayed by the highlight HL2, and the tool information of the tool sequence of the finishing processing is displayed in the tool information display window WIN3.

Conversely, when a machining unit is selected in the unit selection window WIN1, the selected part corresponding to the machining unit selected in CG display window DIS is highlighted. For example, when a turning drill unit is selected in the unit selection window WIN1 (e.g., USEL1 displayed with dot patterns in FIG. 10), the cutting area corresponding to the turning drill unit is displayed by a highlight USEL. Further, even if the machining unit is not selected in the unit selection window WIN1, a tool sequence may be selected in the tool sequence selection window WIN2. In such case, the machining unit corresponding to the selected tool sequence may be selected in the unit selection window WIN1, and the selected part corresponding to the machining unit may be highlighted in CG display window DIS.

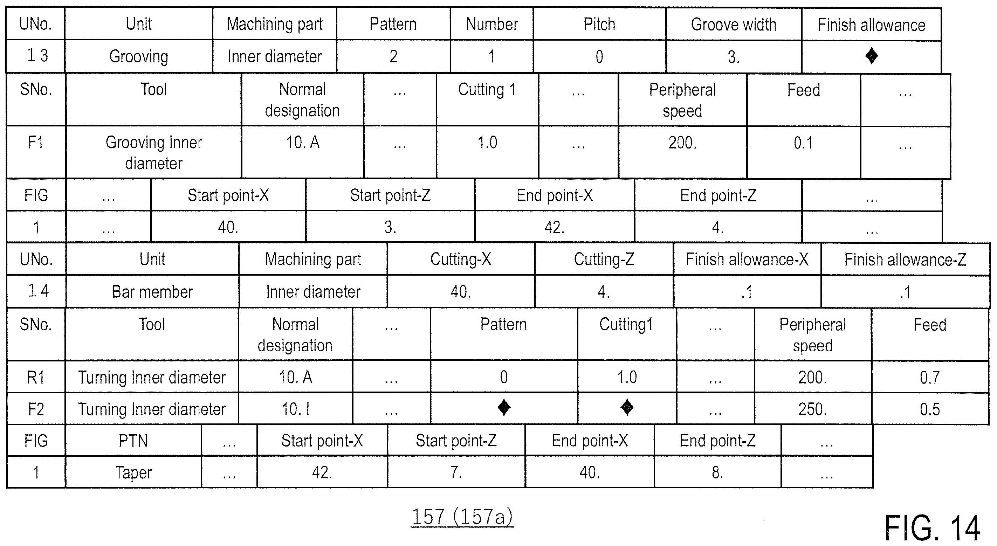

Further referring to FIG. 10, the editing window 30 of the primary machine program 157a has an editing button BU1 in the unit selection window WIN1 and an editing button BU2 in the tool sequence selection window WIN2. When any one of the machining units is selected in the unit selection window WIN1 and the edit-button BU1 is pressed, a screen for editing the parameters between the unit number (UNo.) and the sequencing number (SNo.) of that machining unit is displayed. Since this screen is a known graphical user interface (GUI) such as a text box, further explanation thereof is omitted. When any one tool sequence is selected in the tool sequence selection window WIN2 and the edit-button BU2 is pressed, the tool can be changed by displaying a list of tools whose tool names match among the tools stored as tool information 158 and selecting one of the tools. The machine program editing computer may, for example, display the content illustrated in FIGS. 6 and 8 in a list-format, and provide a GUI selectable for each row. Detailed description of this interface may be referred to, for example, FIG. 14 of International Publication WO2021-024438.

The machine program editing computer thus receives an entry from the user who changes the tool to be used in the selected process (selected tool sequence) among the multiple machining processes from a first assigned tool (tool of the selected tool sequence in the primary machine program 157a) corresponding to the selected process among the multiple assigned tools to a first selected tool (tool selected with the GUI). In the following description, the tool specified by the tool sequence of the turning drill unit will be described as being changed from a tool of normal designation 32.A to a tool of normal designation 10.A.

Next, the machine program editing computer determines whether an improvement request process exist in any one of the machining processes other than the selected process in which a second assigned tool assigned to the improvement request process among the assigned tools is unusable in the improvement request process due to the changing from the first assigned tool to the first selected tool. For this purpose, the memory 152 (220) (storage device) of the machine program editing computer stores a correspondence relation between the selected process and the improvement request process. The data representing this correspondence relation is referred to as correspondence relation data 163. The machine program editing computer acquires information representing the improvement request process based on the correspondence relation from the selected process received by the input and searches, based on the information, whether a process corresponding to the improvement request process is included in the machining processes.

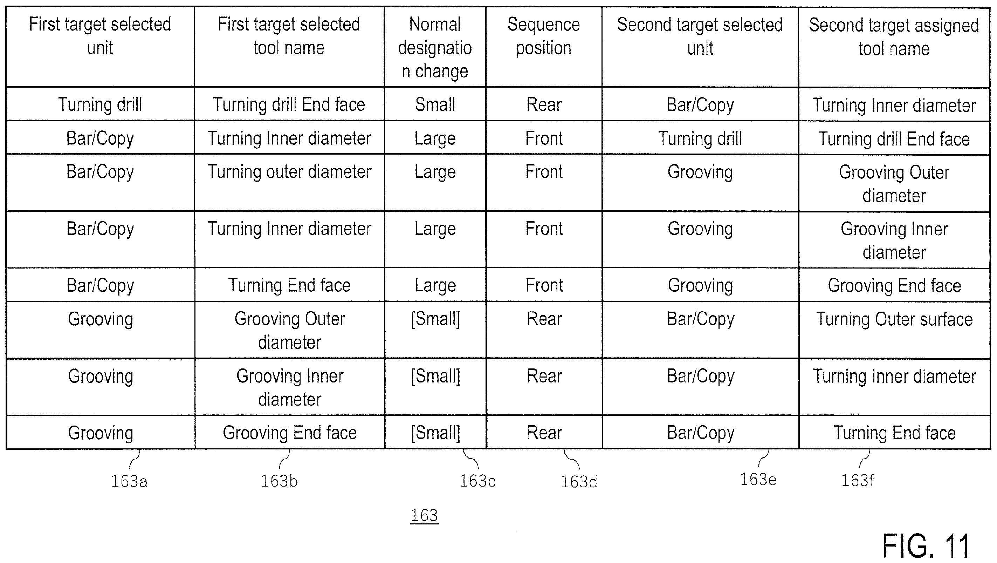

FIG. 11 is an example of the correspondence relation data 163. The correspondence relation data 163 includes, for example, a first selected unit 163a, a first selected tool name 163b, a normal designation change 163c, a sequence position 163d, a second selected unit 163e, and a second assigned tool name 163f. The first selected tool name 163b and the second assigned tool name 163f represent the tool names (name + machining parts) of the first selected tool and the second assigned tool, respectively. With respect to the tool sequences whose machining parts are not defined, only the names of the tool sequences are indicated. The machine program editing computer determines whether both a tool name indicated as a first selected tool name 163b and a tool name indicated as a second assigned tool name 163f exist in the tool sequence of the same machining unit. If both exist, the machine program editing computer determines whether change of the nominal diameter of the first selected tool expressed by a normal designation change 163c has occurred. If it has occurred, the machine program editing computer specifically determines whether the second assigned tool can be used. This specific determination method is described below. Then, if the second assigned is unusable, the machine program editing computer determines that the tool sequence associated with the second assigned tool is the improvement request process.

The first selected unit 163a, the sequence position 163d, and the second selected unit 163e are used to determine the existence of an improvement request process in the tool sequence of differing machining units. The first selected unit 163a represents a machining unit including a selected process. The second selected unit 163e defines a machining unit including a tool sequence in which an initially assigned tool (second assigned tool) may become unusable due to changing from the first assigned tool to the first selected tool. When there are several such machining units, their limits are defined by a delimiter (/). Such a notation method is a mere example. The correspondence relation data 163 may be in any format that can be similarly managed.

The sequence position 163d represents the positional relation between the first selected unit 163a and the second selected unit 163e in the machine program 157 (primary machine program 157a). When this parameter is set to "subsequent", the second selected unit 163e is written subsequent to the first selected unit 163a in the machine program 157 (primary machine program 157a), When this parameter is set to "prior", the second selected unit 163e is written prior to the first selected unit 163a.

In FIG. 11, when focusing on the relation between the first selected unit 163a and the second selected unit 163e in which the sequence position is set to be "subsequent", the first selected unit 163a is a pre-machining process of forming an insertion hole into which a tool to be used in the second selected unit 163e is inserted. The second selected unit 163e includes a side surface enlarging process for inserting the tool into the insertion hole formed in the first selected unit 163a and cutting a side surface of the insertion hole. It is to be noted that the drill tool sequence that is set in the first selected tool name 163b without being set with the first selected unit 163a and the second selected unit 163e is a pre-machining process for forming an insertion hole into which an end mill used in a subsequent end mill tool sequence or boring tool used in a subsequent boring tool sequence is to be inserted. Each of the end mill tool sequence and the boring tool sequence is a side surface enlarging process for inserting the end mill and the boring tool into the insertion hole formed in the drill tool sequence and cutting the side surface of the insertion hole. The end mill tool sequence that is set in the first selected tool name 163b without being set with the first selected unit 163a and the second selected unit 163e is a pre-machining process for forming an insertion hole into which the boring tool to be used in a subsequent boring tool sequence is inserted. The boring tool sequence is a side surface enlarging process for inserting the boring tool into the insertion hole formed in the end mill tool sequence and cutting the side surface of the insertion hole.

Therefore, the selected process can be said to include the pre-machining process for forming the insertion hole into which the tool to be used in the improvement request process is inserted. The improvement request process can be said to include the side surface enlarging process for inserting the tool into the insertion hole formed in the pre-machining process and cutting the side surface of the insertion hole. It can also be said that the tool used for forming the insertion hole is a drilling tool (e.g., a drill) or an end mill in which the tool to be inserted into the insertion hole is at least one of a turning tool, a grooving tool, an end mill, and a boring tool. Besides the drill and the end mill, the turning tool may also be, for example, a dragon diamond core drill. Alternatively, it may be said that the tool used to form the insertion hole is the grooving tool and that the tool to be inserted into the insertion hole is the turning tool.

In FIG. 11, when studying the relation between the first selected unit 163a and the second selected unit 163e in which the sequence position is set to be "front", the second selected unit 163e is the pre-machining process for forming an insertion hole into which the tool used in the first selected unit 163a is inserted. The first selected unit 163a is a side surface enlarging process for inserting the tool into the insertion hole formed in the pre-machining process and cutting the side surface of the insertion hole. It is to be noted that the drill tool sequence that is set as the second assigned tool name 163f without being set with the first selected unit 163a and the second selected unit 163e is a pre-machining process for forming an insertion hole into which a boring tool to be used in a subsequent boring tool sequence is inserted. The boring tool sequence that is set as the first selected tool name 163b without being set with the first selected unit 163a and the second selected unit 163e is a side surface enlarging process for inserting the boring tool into the insertion hole formed in the drill tool sequence and cutting the side surface of the insertion hole. Therefore, it can be said that the improvement request process includes a pre-machining process for forming an insertion hole into which the tool to be used in the selected process is inserted. The selected process may be said to include the side surface enlarging process for inserting the tool into the insertion hole formed in the pre-machining process and cutting the side surface of the insertion hole.

In a case where the tool name indicated as the second assigned tool name 163f exists in the tool sequence in the second selected unit 163e existing at the position specified by the sequence position 163a, the machine program editing computer determines whether the tool of the tool sequence of the machining unit to be subsequently executed among the first selected unit 163d and the second selected unit 163e is able to pass the cutting part cut by the tool sequence of the machining units executed beforehand among the first selected unit 163a and the second selected unit 163e.

In the case where the tool passes, the machine program editing computer determines whether the nominal diameter of the first selected tool has changed according to the indication of the normal designation change 163c. In a case where a change has occurred, it is specifically determined whether the second assigned tool is usable. This specific determination method is described below. Further, if the second assigned tool is unusable, the machine program editing computer determines that the tool sequence set with the second assigned tool is the improvement request process.

At this time, it is assumed that the tool specified by the tool sequence of the turning drill machining unit has been changed from the turning drill of the normal designation 32.A to the turning drill of the normal designation 10.A in the primary machine program 157a of FIG. 4. Further, the changed tool is a "turning drill end face" and the machining unit including the tool sequence is a "turning drill" machining unit. Because the turning drill machining unit contains only one tool sequence, the machine program editing computer refers to the correspondence relation data 163 and searches for determining whether any of the bar/copy machining units exist subsequent to the "turning drill" machining unit. When the "bar" machining unit is found subsequent to the "turning drill" machining unit in the primary machine program 157a, the machine program editing computer then determines whether there is a tool sequence having a tool designation of "turning" within the bar machining unit. When it is determined that there is a tool sequence having a tool designation of "turning", the machine program editing computer determines whether the machining part parameter of the bar machining unit is "inner diameter". This is because the machining part parameter of the bar machining unit being "inner diameter" signifies that the tool of "turning inner diameter" of the bar machining unit passes through the hole drilled by the preceding "turning drill".

Because the tool with the normal designation 10.A of the tool sequence for rough processing and the tool with the normal designation 10.I of the tool sequence for finishing processing satisfy all of these conditions, the machine program editing computer determines whether these two tools are usable based on whether they satisfy the above-described [Condition 10].

Referring to the tool information 158 in FIG. 6, the machining diameter becomes Dr1=10.0mm because the normal designation "turning drill" is changed to 10.A. On the other hand, referring to the tool information 158 in FIG. 8, the minimum machining diameter MR1 becomes 12.5 for both the turning tool with the normal designation 10.A and the turning tool with the normal designation 10.1. Therefore, the machine program editing computer determines that both the turning tool with the normal designation 10.A and the turning tool with the normal designation 10.I are unusable. Accordingly, the machine program editing computer determines that the tool sequence for rough processing and the tool sequence for finishing processing are the improvement request processes. Thus, the machine program editing computer determines that the improvement request process exist in the case where the second assigned tools (turning tools with the normal designations 10.A, 10.I) cannot be inserted into the insertion hole due to the size of the insertion hole (drill hole) formed by the first selected tool (turning drill with the normal designation 10.A) being smaller than the size of the insertion hole (drill hole) formed by the first assigned tool (turning drill with the normal designation 32.A).

Thus, when the improvement request process exists, the machine program editing computer changes the second assigned tools (turning tools with the normal designation 10.A, 10.I) to the second selected tool having a shape that can be inserted into the insertion hole formed by the first selected tool (turning drill with the normal designation 10.A). Specifically, the machine program editing computer changes the tool used in the tool sequence for rough processing from the tool with the normal designation 10.A to the tool that can be used in the tool sequence for roughing processing. The tool that can be used in the tool sequence for rough processing includes the tools that satisfy all the above-described [Condition 7] to [Condition 11]. In the example illustrated in FIG. 8, the corresponding tool may be, for example, the tool with the normal designation 5.A. That is, the turning tool with the normal designation 5.A corresponds to the second selected tool. It is to be noted that, in a case where there are multiple tools satisfying these conditions, the machine program editing computer selects the one having the largest minimum machining diameter MR1 (one having the smallest change in the minimum machining diameter MR1).

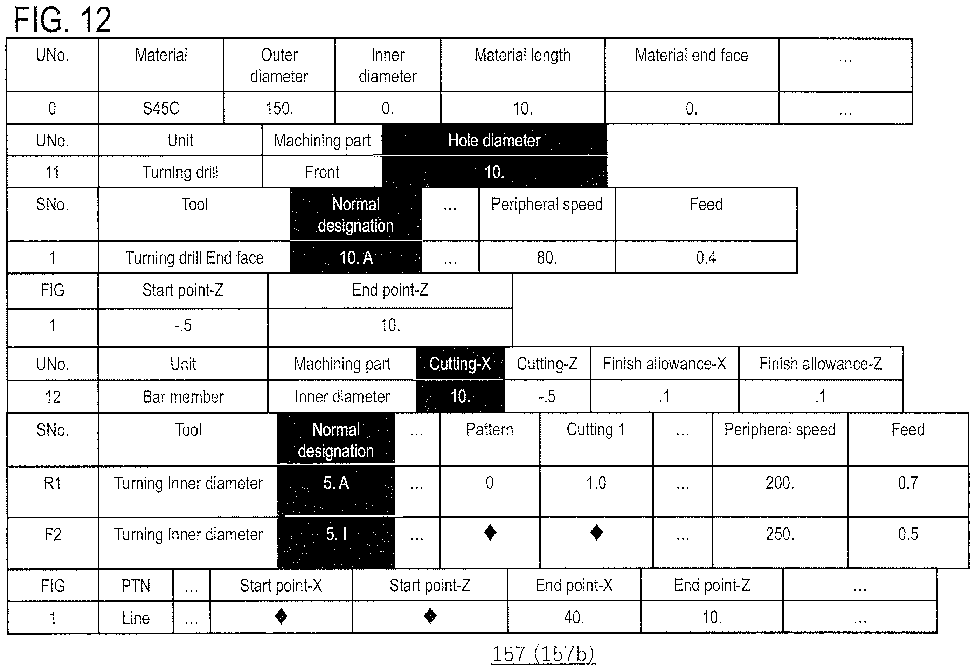

Similarly, the machine program editing computer changes the tools to be used in the tool sequence for the finishing processing from the tools with the normal designation 10.I to the tool that can be used in the tool sequence for finishing processing. The tools that can be used in the tool sequence for finishing processing include the tools that satisfy all of the above-mentioned [Condition 7] to [Condition 11]. In the example illustrated in FIG. 8, for example, the corresponding tool may be, for example, the tool with the normal designation 5.G. That is, the turning tool with the normal designation 5.G corresponds to the second selected tool. FIG. 12 shows the secondary machine program 157b modified as described above. In FIG. 12, the areas of the secondary machine program 157b modified with the primary machine program 157a are indicated by reversed-out markings. Note that, it is preferable for the machine program editing computer to modify the start point-X parameter of the shape-sequence to 10.0 in accordance with the normal designation of the first selected tool (turning drill with the normal designation 10.A) when the improvement request process is determined.

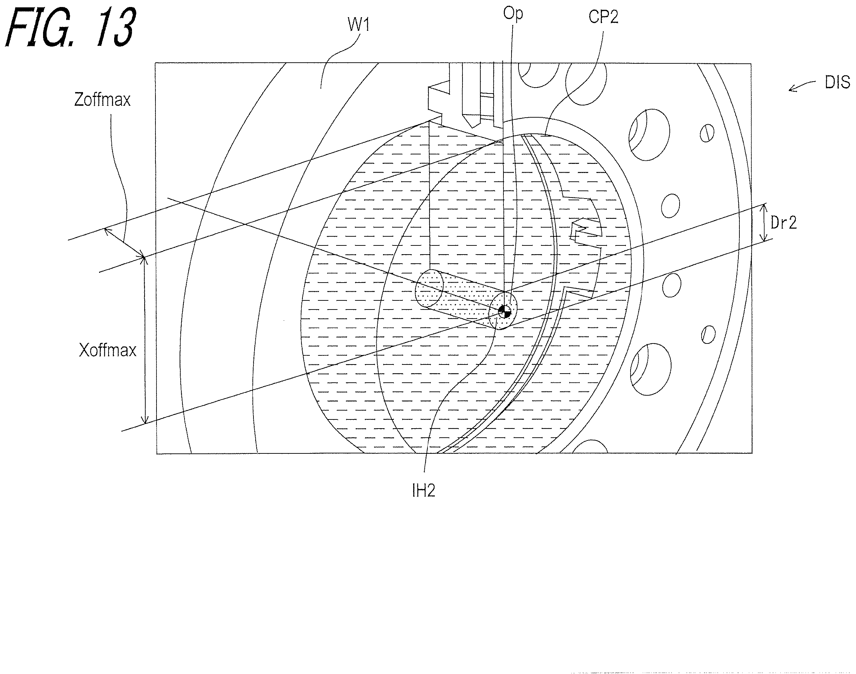

Further, the machine program editing computer may allow the display 154 (240) to display the cutting shape before and after changing the tool. FIG. 5 is an example of a display of the cutting shape before the changing of the tool. As illustrated in FIG. 5, the machine program editing computer calculates a first cutting shape (CP1 of FIG. 5) to be cut off by the second assigned tool (turning tools with normal designations 10.A, 10.I) and instructs the display 154 (240) to display the first cutting shape. FIG. 13 is an example of a display of the cutting shape after the changing of the tool. In FIG. 13, Dr2 corresponds to the nominal diameter 10.A of the turning drill after the change of the tool. The area IH2 illustrated with dot patterns indicates the area to be cut by the turning drill after the change of the tool. The area CP2 illustrated with hatchings using dashed lines indicates the area to be cut in the bar inner diameter machining unit after the change of the tool. As illustrated in FIG. 13, the machine program editing computer calculates the second cutting shape (CP2) to be cut off in the improvement request process based on the change of the improvement request process (two tool sequences of the bar inner diameter machining unit) and instructs the display 154 (240) to display the second cutting shape.

Further, when the improvement request process does not exist, the machine program editing computer generates a machine program (secondary machine program 157b) in which the first assigned tool among multiple assigned tools is modified to the first selected tool. When the improvement request process exists, the machine program editing computer modifies the first assigned tool among multiple assigned tools to the first selected tool and generates a machine program (secondary machine program 157b) in which the second assigned tool is modified to the second selected tool.

In another example, the program illustrated in FIG. 12 is the primary machine program 157a. Further, the user changes a tool of a tool sequence for rough processing to a turning drill with a normal designation 10.A and changes a tool of a tool sequence for finishing processing to a turning tool with a normal designation 10.I via the above-described interface. At this time, the selected process corresponds to each of the tool sequences for rough processing and each of the tool sequences for finishing processing. In a case where the selected process is the tool sequence for rough processing, the first assigned tool corresponds to the turning tool with the normal designation 5.A, and the first selected tool corresponds to the turning tool with the normal designation 10.A. In a case where the selected process is the tool sequence for finishing processing, the first assigned tool corresponds to the turning tool with the normal designation 5.G, and the first selected tool corresponds to the turning tool with the normal designation 10.I.

At this time, the machine program editing computer refers to the correspondence relation data 163 as illustrated in FIG. 11. In a case where the first selected tool name 163b is "turning inner diameter", the machine program editing computer confirms that an improvement request process exists when there is a tool sequence of "turning drill end face" or a tool sequence of "grooving inner diameter" prior to the tool sequence of "turning inner diameter". Then, the machine program editing computer searches to determine whether the tool sequence "turning drill end face" or the tool sequence "grooving inner diameter" is included in the "bar inner diameter machining unit" including the tool sequence set with the first selected tool. In the machine program illustrated in FIG. 12, neither the tool sequence "turning drill end face" nor the tool sequence "grooving inner diameter" exists in the "bar inner diameter machining unit". Therefore, the machine program editing computer searches to determine whether either the turning drill machining unit including the tool sequence "turning drill end face" or the grooving machining unit including the tool sequence "grooving inner diameter" exists prior to the "bar inner diameter machining unit". In the case of the machine program illustrated in FIG. 12, the machine program editing computer thus detects the turning drill unit of unit number 11 which includes the tool sequence "turning drill end face". In a case where the first selected tool name 163b is "turning inner diameter", this signifies that the turning tool designated by the first selected tool name 163b passes through the hole drilled by the turning drill designated by "turning drill end face" of the turning drill machining unit.

Then, the machine program editing computer determines whether the turning drill of the normal designation 10.A (second assigned tool) can be used based on whether the tool satisfies the above-described [Condition 10]. Because the normal designation "turning tool" has been changed to 10.A, 10.1, the minimum machining diameter MR1 is 12.5 for both of these tools. On the other hand, because the normal designation "turning drill" is 10.A, the machining diameter thereof is Dr1=10.0m. Therefore, the machine program editing computer determines that the turning drill with the normal designation "10.A" cannot be used. Accordingly, the machine program editing computer determines that the turning drill machining unit of unit number 11 including the tool sequence "turning drill end face" is an improvement request process. Thus, the machine program editing computer determines that an improvement request process exists in a case where the first selected tools (turning tools of normal designations 10.A, 10.1) cannot be inserted into the insertion hole due to the first selected tools (turning tools of normal designations 10.A, 10.I) being larger than the first assigned tools (turning tools of normal designations 5.A, 5.I).

Thus, when the improvement request process exists, the machine program editing computer changes the second assigned tool (turning drill of normal designation 10.A) to the second selected tool that can be used to form an insertion hole having a size into which the first selected tools (turning tools of normal designations 10.A, 10.1) can be inserted. The tool that can be used in the tool sequence "turning drill end face" is one that satisfies all the above-described [Condition 1] to [Condition 5] and [Condition 10]. In the example illustrated in FIG. 6, the corresponding tool may be, for example, the turning drill with the normal designation 32.A. That is, the turning drill with the normal designation 32.A corresponds to the second selected tool. In a case where there are multiple tools satisfying these conditions, the machine program editing computer selects the one having the smallest minimum machining diameter MR1 (the one having the smallest change in the minimum machining diameter MR1 before and after the changing of tools). Further, when the normal designation 32.A of the turning drill has been determined, it is preferable for the machine program editing computer to modify the start point-X parameter of the shape sequence of the bar inner diameter machining unit to 32.0 in accordance with the normal designation 32.A of the second selected tool (turning drill).

### <Features of processing in the case of a machine program including a grooving tool>

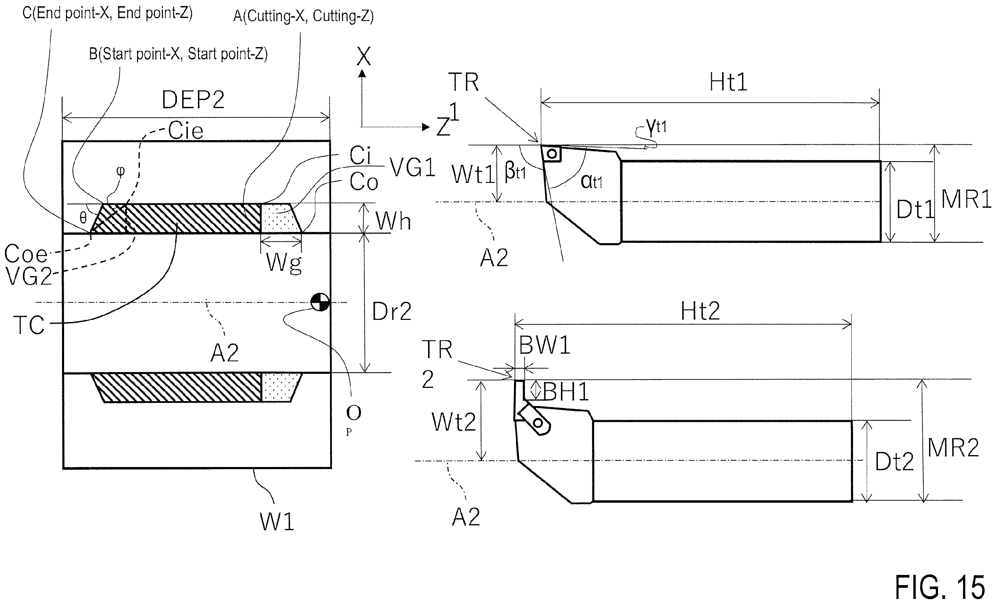

FIG. 14 illustrates an example of a machine program 157 including a grooving tool. For the sake of explanation, the program illustrated in FIG. 14 is described as being provided after the bar machining unit of unit number 12 in FIG. 4. FIG. 15 is a diagram for explaining the cutting shape by the machine program 157 of FIG. 14 and the shape of the grooving tool.

The unit number (UNo.) 13 in FIG. 14 indicates a machining unit with a grooving tool for further machining the outer peripheral surface of the hole machined by the code in FIG. 4. The unit number (UNo.) 14 indicates a machining unit for machining the side surfaces of a hole machined by a grooving tool. Hereinafter, the machining unit of unit number 13 is referred to as a groove machining unit, and the machining unit of unit number 14 is referred to as a bar inner diameter machining unit. The groove machining unit includes a tool sequence having sequence number (SNo.) F1 and a shape sequence consisting of a start point-X, a start point-Z, an end point-X, and an end point-Z of FIG 1. The bar inner diameter machining unit includes a tool sequence having a sequence number (SNo.) R1, a tool sequence having a sequence number (SNo.) F2 and a shape sequence representing the taper pattern of FIG 1.

The groove machining unit includes parameters commonly used in the tool sequence and the shape sequence between the unit number (UNo.) and the sequence number (SNo.). The parameters include a machining part parameter, a groove shape pattern definition parameter, a groove number parameter, a groove pitch parameter, a groove width parameter, and a finishing allowance parameter. The machining unit parameter is a parameter for setting a target to be machined including a flat end surface of either the right or left side of the workpiece W1, an end surface of the outer diameter of the workpiece W1, and the side surface ("inner diameter") of the hole drilled in the workpiece W1. The groove shape pattern definition parameter ("pattern") is a parameter that defines the cutting shape that is to be cut by the grooving tool. The cross-sectional shape VG1 that is oriented in a parallel direction with respect to the rotation axis A2 of the cutting shape is illustrated with a dot pattern in FIG. 15. The groove number parameter ("number") is a parameter for setting how many grooves that have a shape set by the groove shape pattern definition parameter and a position set in the machining part parameter. The groove pitch parameter ("pitch") is a parameter that defines the spacing of grooves when the number set by the groove number parameter is multiple. The groove width parameter is the length of the groove width indicated by Wg in FIG. 15. The finishing allowance parameter is the allowance for finishing processing. Because this machining unit has no rough machining and consists of finishing processing only, the input of the finishing allowance parameter is omitted.

The tool sequence of the grooving unit is the tool sequence for finishing processing. This tool sequence includes, for example, tool parameters, normal designation parameters, pattern parameters, cut-in-one parameters, peripheral speed parameters, and feed parameters. This tool sequence is a tool sequence for finishing processing. The tool parameter specifies the grooving tool for groove machining. The normal designation parameters include a nominal diameter ("10.0") and suffix ("A"). The suffix is used to distinguish each tool in a case where there are multiple tools that have the same tool parameter and the same nominal diameter. The cutting 1 parameter indicates the maximum amount of cutting in the X-axis direction in one stroke. The pattern parameter defines the tool path for each stroke. In this example, the cutting-edge is moved to the cutting start point in the first stroke. Then, the cutting-edge is moved in the X-axis direction and cuts the workpiece W1 at the cutting depth within the cutting 1 parameter. Then, the cutting-edge returns to the cutting start point. In the subsequent strokes, the cutting-edge is moved in the X-axis direction again and cuts the workpiece W1 at a cutting depth within the cutting 1 parameter. Thereby, the workpiece is finally cut to a requested groove depth. Further, in a case where the groove width Wg is longer than the blade edge width BW1 (see FIG. 15), the same stroke is repeated by shifting the blade edge in the Z-axis direction. The above-described tool path is set as the preset tool path. Note that various other tool paths may be set as the preset tool path. Such a tool path is automatically set in the tool sequence for finishing processing. The peripheral speed parameter represents the rotational speed of the first spindle 122 that holds the workpiece W1. The feed parameter indicates the moving speed when the grooving tool is linearly moved in, for example, the X-axis direction.

The bar machining unit of unit number 14 in FIG. 14 sets the same parameters as the bar machining unit of unit number 12 in FIG. 4 except for the shape sequence. Thus, only the shape sequence is described. The shaded hatched area TC in FIG. 15 represents the shape defined in this shape sequence. The shaded hatched area TC represents the cross-sectional shape oriented in a parallel direction with respect to the rotation axis A2 of the cutting shape to be cut by the bar machining unit of unit number 14. Point A in FIG. 15 represents the cutting start point and is defined by (cutting-X/2, cutting-Z). Point B in FIG. 15 is defined by (start point-X/2, start point-Z). Point C in FIG. 15 is defined by (end point-X/2, end point-Z). The shaded hatched area TC is defined by a trapezoid consisting of four points represented by points A, B, C, and (cutting-X/2, start point-Z).

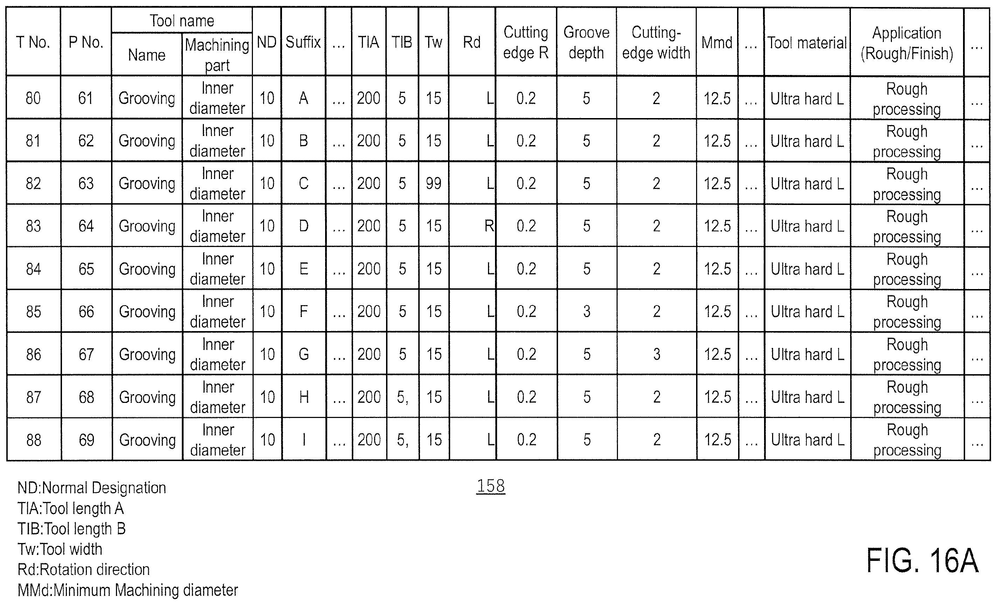

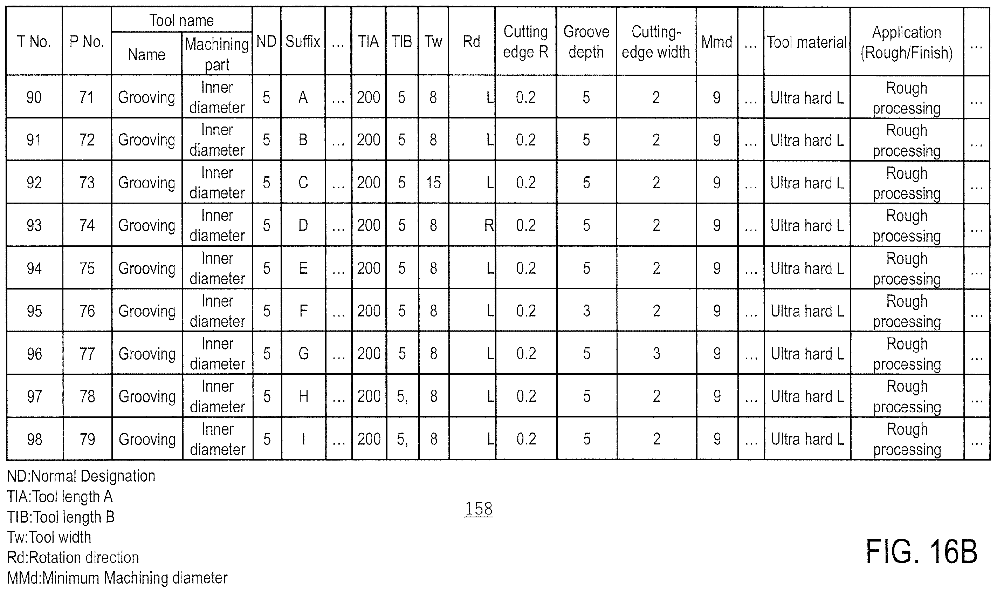

The machine program generating computer sets the optimum grooving tool for machining the tool to be set in the tool sequence of the groove machining unit. FIG. 16 is an example of tool information 158 of the grooving tool. As illustrated in FIG. 16, the tool information 158 of the turning tool includes a T number (TNo.), a pocket number (PNo.), a tool name (name + machining part), and a normal designation + suffix. Further, the tool information includes parameters (dimensions) corresponding to these items such as the tool length A, the tool length B, the tool width, the rotation direction, the cutting-edge R, the groove depth, the cutting-edge width, the minimum machining diameter, the tool material, the application (rough/finish). Although these parameters are mostly the same as those of turning tools, they differ in the groove depth and the cutting-edge width. The groove depth corresponds to the length BH1 in FIG. 15. The cutting-edge width corresponds to the length BW1 in FIG. 15. FIG. 15 illustrates the tool length A, the tool length B, the tool width, and the minimum machining diameter of the grooving tool as Ht2, Wt2, Dt2, MR2, respectively.

The machine program generating computer may, for example, select and set the optimum grooving tool based on the following [Condition 14] to [Condition 20].
[Condition 14] The material of the tool is the material that can machine the workpiece W1.
[Condition 15] The rotation direction matches the rotation settings of the first main spindle 122/second main spindle 123 and the traveling direction of the tool.
[Condition 16] The tool length A (Ht2) is larger than the machining depth DEP2.
[Condition 17] The minimum machining diameter MR2 is smaller than the machining diameter Dr2 formed in the bar machining unit of unit number 12.
[Condition 18] It matches the purpose of rough machining and finishing processing in the program.
[Condition 19] The cutting-edge width BW1 is shorter than the groove width Wg. More specifically, the cutting-edge width BW1 is formed in a length enabling the cross-sectional shape VG1 having the groove shape pattern to be formed.
[Condition 20] The groove depth BH1 is shorter than the groove height Wh = |(end point-X/2)-(start point-X/2) |

The machine program generating computer may select and set the optimum turning tool based on [Condition 12] and [Condition 13] in addition to the above [Condition 7] to [Condition 11] for the turning tool of the bar machining unit of unit number 14.
[Condition 12] The minor cutting angle γₜ₁ is smaller than arctan (Wh/Wg). That is, the minor cutting angle γₜ₁ is set so that it becomes a Wgtanγₜ₁ > Wh. Thereby, the turning tool does not contact the outer corner Co even when the cutting-edge of the turning tool is in contact with the inner corner Ci.
[Condition 13] The cutting angle βₜ₁ is greater than the angle θ of FIG. 15. Note that, in a case where machining is performed with the groove machining unit on the opposite side of the cross-sectional shape VG1 (area VG2 illustrated with dotted lines in FIG. 15), the cutting angle βₜ₁ is greater than the angle φ in FIG. 15. so that the turning tool does not contact the outer corner Coe even when the cutting-edge of the turning tool is in contact with the inner corner Cie.

The machine program generating computer sets the tool of the normal designation 10.A as the tool of the tool sequence of the grooving machining unit (as the assigned tool) based on [Condition 14] to [Condition 20]. The machine program generating computer selects a tool that satisfies the conditions for rough machining of the bar inner diameter machining unit and has a T number of 10 and a normal designation of 10.A as the assigned tool based on [Condition 14] to [Condition 20]. The machine program generating computer selects a tool which satisfies the conditions for finishing processing of the bar inner diameter machining unit and has a T number of 10 and a normal designation of 10.I, as the assigned tool.

Next, the processing of the machine program editing computer is described by referring to a case where the turning tool used for the tool sequence for rough machining is changed from a turning tool having a normal designation of 10.A to a turning tool having the normal designation of 10.G by using the above-described interface. In this example, the tool sequence for rough machining corresponds to the selected process, the initial turning tool having the normal designation of 10.A corresponds to the first assigned tool, and the turning tool having the normal designation of 10.G corresponds to the first selected tool. First, the machine program editing computer refers to the correspondence relation data 163. In a case where the first selected tool name 163b is "turning inner diameter" which is a tool name of a turning tool having the normal designation 10.G, the machine program editing computer confirms that the improvement request process exists when there is either the tool sequence of "turning drill end face" or the tool sequence of "grooving inner diameter" prior to the tool sequence of the "turning inner diameter".

Next, the machine program editing computer searches to determine whether the tool sequence of "turning drill end face" or the tool sequence of "grooving inner diameter" is included in the "bar inner diameter machining unit" including the tool sequence to which the first selected tool is set. In the machine program illustrated in FIG. 14, since neither the tool sequence of "turning drill end face" nor the tool sequence of "grooving inner diameter" exist in the bar inner diameter machining unit of unit number 14, the machine program editing computer searches for either a turning drill unit including a tool sequence of "turning drill end face" or a groove machining unit including a tool sequence of "grooving inner diameter" prior to the bar inner diameter machining unit.

In this machine program, both the turning drill machining unit and the groove machining unit exist. In this case, however, the machine program editing computer searches whether there is a tool sequence of "grooving inner diameter" in the "groove machining unit" which is closer to the bar inner diameter machining unit of unit number 14. Here, whether it is "closer" may be determined based on the number of other machining units between the machining unit of the reference source and the machining unit of the reference destination. In the case of the machine program illustrated in FIG. 14, the machine program editing computer thus detects the groove machining unit of unit number 13 that includes the tool sequence of "grooving inner diameter". Because the cutting start point (point A in FIG. 15) defined by (cutting-X/2, cutting-Z) of the "bar inner diameter machining unit" is in contact with the cross-sectional shape VG1 of the having a groove-shape pattern of the groove machining unit, the machine program editing computer determines that the turning tool of the normal designation 10.A of the bar machining unit to be executed later passes the hole drilled by the grooving tool specified by the "grooving inner diameter" of the grooving unit to be executed earlier.

Then, the machine program editing computer performs a specific determination of whether the second assigned tool can be used due to the occurrence of a change in which the nominal diameter of the first selected tool represented by a normal designation change 163c becomes larger. As a specific determination, the machine program editing computer determines whether [Condition 7] to [Condition 13] are satisfied. At this time, the minor cutting angle γₜ₁ is 180°-95°-55° = 30°. If the initial groove machining unit remains as is, Wgtanγₜ₁ =1.732.>Wh = 2.0. Therefore, if [Condition 12] is not satisfied and the groove width Wg of the tool sequence of the groove machining unit is not changed, the turning tool of the normal designation 10.G cannot be used. Therefore, the machine program editing computer determines that the tool sequence of the groove machining unit is an improvement request process. At this time, the grooving tool of the normal designation 10.A corresponds to the second assigned tool. In other words, the machine program editing computer determines whether an improvement request process exists in any one of the machining processes other than the selected process in which the first selected tool becomes unusable unless the preset tool path of the second assigned tool of multiple assigned tools corresponding to the process is changed due to changing from the first assigned tool to the first selected tool. The preset tool path is a tool path defined by a groove-width parameter and a pattern parameter of the tool sequence having a sequence number F1.

Thus, when the improvement request process exists, the machine program editing computer changes the tool path of the second assigned tool (grooving tool) so that the first selected tool can become usable. Specifically, the machine program editing computer changes the groove width parameter of the groove machining unit to 4.0. By doing so, Wgtanγt1=2.309...>Wh =2.0 and the [Condition 12] are satisfied. Because the product shape is set to not change even if the groove width parameter is changed, the shape sequence of the grooving unit is also to be changed if the product shape changes when the groove width parameter changes. In this example, the groove shape pattern is "2", and the shape sequence (start point-X/2, start point-Z) (end point-X/2, end point-Z) hatched with a dotted pattern specifies only the right side of the cross-sectional shape VG1 having the groove shape pattern. Therefore, the shape sequence of the groove machining unit need not be changed. Along with the change of the groove width parameter, the parameter of the cutting-Z of the bar machining unit is changed to correspond to a point corresponding to the corner of a notched part in the groove machining unit.

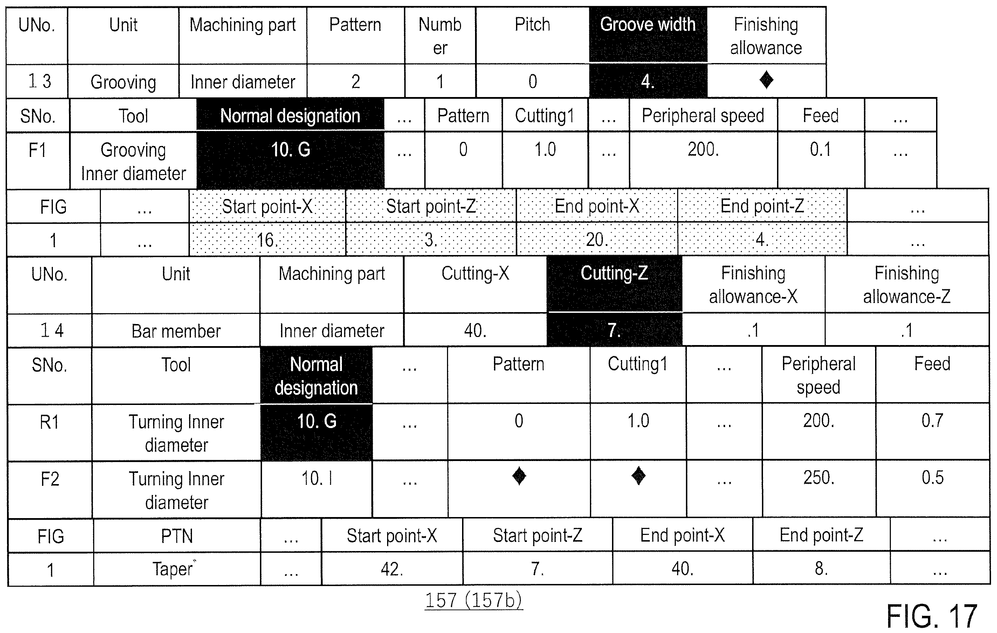

Further, it is preferable for the machine program editing computer to change the tool to be used in the improvement request process (grooving tool) from the second assigned tool (grooving tool of normal designation 10.A) to the second selected tool that can be used in the improvement request process. It is preferable for the tool that can be used in the tool sequence of "grooving bore diameter" to satisfy all the above-described [Condition 12], [Condition 14] to [Condition 20] to have the largest cutting-edge width BW1. This is for reducing the number of strokes. In the example illustrated in FIG. 16, a corresponding tool may be, for example, a grooving tool of normal designation 10.G. This cutting-edge width BW1 corresponds to the length of the top bottom of the cross-sectional shape VG1 having the groove shape pattern. FIG. 17 illustrates the secondary machine program 157b modified as described above. In FIG. 17, the areas in the secondary machine program 157b modified with the primary machine program 157a are indicated by reversed-out markings.

As another example, the program illustrated in FIG. 17 is a primary machine program 157a. Further, in this example, the user uses the above-described interface to change the grooving tool of normal designation 10.G to the grooving tool of normal designation 10.A and change the grooving parameter to 3.0. The change of the groove width parameter may be conducted, for example, by pressing the edit button BU1 of the unit selection window WIN1 of FIG. 10 and changing the groove width parameter with the GUI. Alternatively, the machine program editing program 159 may have a function of automatically changing the groove width parameter along with modifying the grooving tool. At this time, the selected process corresponds to the tool sequence of the groove machining unit. The first assigned tool corresponds to a grooving tool of normal designation 10.G, and the first selected tool corresponds to a grooving tool of normal designation 10.A. Changing the groove width parameter is equivalent to changing the tool path of the grooving tool. That is, the machine program editing computer receives an input from the user to change the tool path of the tool (grooving tool) to be used in the selected process (tool sequence of the grooving unit) among the multiple machining processes from the preset tool path (tool path when the groove width is 4.0) to the selected tool path (tool path when the groove width is 3.0).

Next, the machine program editing computer determines whether an improvement request process exists in any one of the machining processes other than the selected process (tool sequence of the groove machining unit) in which the second assigned tool among the multiple assigned tools corresponding to the process becomes unusable due to changing the selected tool path (tool path when the groove width is 3.0). Specifically, in a case where the first selected tool name 163b is "grooving inner diameter" which is a tool name of a grooving tool having the normal designation 10.A, the machine program editing computer confirms that the improvement request process exists when there is a tool sequence of "turning inner diameter" after that tool sequence.

In this machine program, there is a tool sequence of "turning inner diameter" of unit number 14 after the groove machining unit. Therefore, the machine program editing computer searches to determine whether there is a tool sequence of "turning inner diameter" in the "bar machining unit" of unit number 14. In the case of the machine program illustrated in FIG. 14, the machine program editing computer thus detects the bar machining unit of unit number 14 which contains the tool sequence "turning inner diameter".

Next, because the cutting start point (point A in FIG. 5) defined by (cutting-X/2, cutting-Z) of the "bar inner diameter machining unit" is in contact with the cross-sectional shape VG1 having a groove-shape pattern of the groove machining unit before the changing of the tool path (tool path at the time when the groove width is 4.0), the machine program editing computer determines that the turning tool of the normal designation 10.G of the bar machining unit to be subsequently executed passes through the hole drilled by the grooving tool specified by the "grooving inner diameter" of the grooving unit that is priorly executed. Therefore, the turning tool of the normal designation 10.G corresponds to the second assigned tool.

Accordingly, the machine program editing computer then refers to the normal designation change 163c. Here, the normal designation change 163c being "small" refers to the size of the opening formed by the tool path regardless of the nominal diameter of the first selected tool. In this case, the machine program editing computer determines that a change represented by the normal designation change 163c occurred if the size of the groove-width parameter is reduced. In this case, since the groove-width parameter is reduced from 4.0 to 3.0, the machine program editing computer determines that a change represented by the normal designation change 163c has occurred.

Because the change represented by the normal designation change 163c has occurred, the machine program editing computer specifically determines whether the second assigned tool (turning tool of normal designation 10.G) can be used. The tools that can be used in the tool sequence of "turning inner diameter" are tools that satisfy all of the above-described [Condition 7] to [Condition 13]. As described above, [Condition 12] is not satisfied because Wgtanγₜ₁ = 1.732..< Wh = 2. Therefore, the second assigned tool (turning tool of the normal designation 10.G) cannot be used. Thus, the machine program editing computer determines the tool sequence of the sequence number R1 of the bar material machining unit of the unit number 14 to be an improvement request process.

In a case where the improvement request process (tool sequence of sequence number R1) exists, the machine program editing computer changes the tool used in the improvement request process (tool sequence of sequence number R1) from the second assigned tool (turning tool of normal designation 10.G) to the second selected tool (turning tool of normal designation 10.A) that is usable in the improvement request process (tool sequence of sequence number R1) At this time, the minor cutting angle γt1 is 180°-95°-50° = 35°. Note that [Condition 12] is satisfied because Wgtanγₜ₁= 2.100.. > Wh = 2. Because the other parameters are also the same as the normal designation 10.A, [Condition 7] to [Condition 13] are satisfied. In this case, the machine program editing computer may display the cutting shape before and after changing the tool on the display 154 (240).

When the turning tool (normal designation 10.G) is replaced with a larger turning tool in the example of FIG. 17, only the groove width parameter may be changed if the turning tool can be inserted into the insertion hole formed by the grooving tool by changing only the groove width parameter without changing the grooving tool. In this case, only the tool path of the grooving tool is changed.

Further, the examples of Figs. 14 to 17 are examples of machining the inner diameter of the hole drilled in the workpiece W1. However, except for the below-described tool selection conditions, the examples of Figs. 14 to 17 may also be applied in a case of machining the outer periphery (outer diameter) of the workpiece or the end surface of the workpiece. In a case of machining the outer periphery (outer diameter) of the workpiece or the end face of the workpiece, the interference between the wall surface of the hole and the tool need not be considered. Therefore, a tool may be selected to satisfy [Condition 7], [Condition 8], [Condition 11] to [Condition 13] for the turning tool and satisfy [Condition 14], [Condition 15], [Condition 18] to [Condition 20] for the grooving tool.

### <Method of generating secondary machine program 157b by using machine program editing program 159>

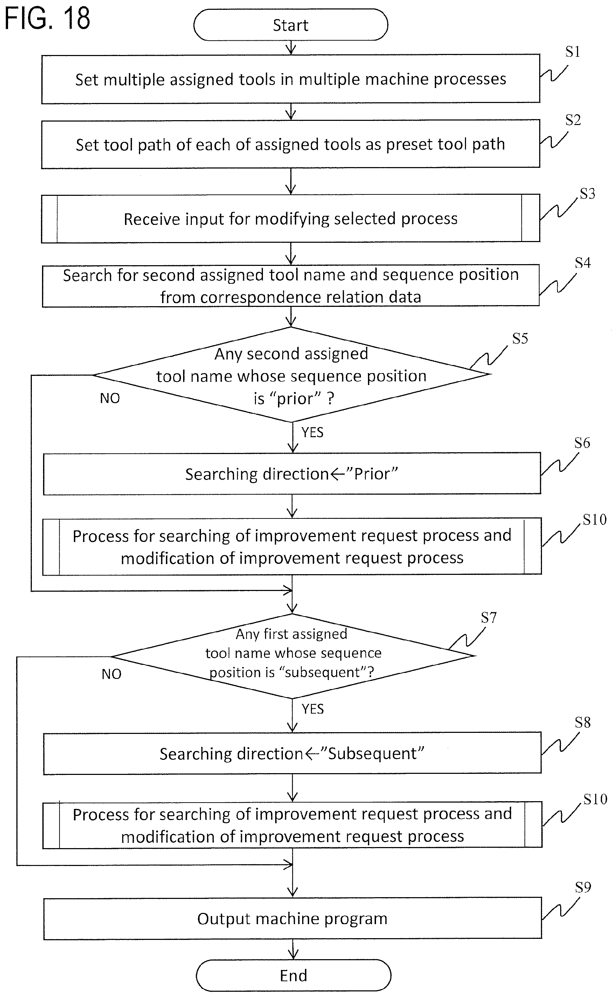

Next, a method of assisting the generation of the machine program 157 using the machine program editing program 159 is described with reference to a flowchart. FIG. 18 is a flowchart relating to a method of assisting machine program generation. In process S1 of FIG. 18, the machine program editing computer sets multiple assigned tools in multiple machining processes. In process S2, the machine program editing computer sets a tool path of each of the assigned tools as a preset tool path. These processes may be realized, for example, by allowing the machine program editing computer to read the primary machine program 157a generated by the machine program generating computer. However, the data that the machine program editing computer reads need not be the primary machine program 157a but may be intermediate processed data in which only the tool and the tool path are defined.

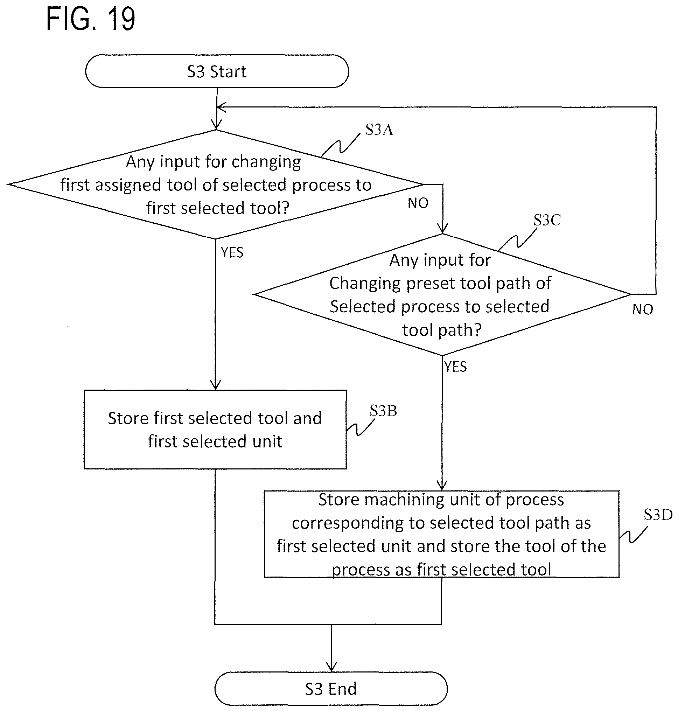

In process S3, the machine program editing computer receives a modification input of the selected process using the editing window 30 of the primary machine program 157a as illustrated in FIG. 10. Specifically, in process S3A illustrated in FIG. 19, the machine program editing computer receives an input to change the first assigned tool in the selected process to the first selected tool by using the tool sequence selection window WIN2. When the input is accepted (Yes in process S3A), the machine program editing computer stores the selected first selected tool and the first selected unit 163a in the memory 152 (220) (storage device) in process S3B. If there is no input to change the first assigned tool to the first selected tool (No in process S3A), the machine program editing computer receives an input to change the preset tool path of the selected process to the selected tool path by using a unit selection window WIN1 (for example, editing the groove width parameter of the groove machining unit) and a tool sequence selection window WIN2 (for example, editing the machining hole diameter parameter of the end mill tool sequence) in process S3B of FIG. 19. When the input is accepted (Yes in process S3C is), the machine program editing computer stores the machining unit of the process corresponding to the selected tool path as the first selected unit 163a and the tool of the process as the first selected tool in the memory 152 (220) (storage device) in process S3D.

In process S4, the machine program editing computer searches for the second assigned tool name 163f and the sequence position 163d corresponding to the first selected tool name 163b of the selected process from the correspondence relation data 163. Note that, in a case where there are multiple second assigned tool names 163f and sequence positions 163d corresponding to the first selected tool name 163b of the selected process, the machine program editing computer extracts all the corresponding second assigned tool names 163f and sequence positions 163d.

In process S5, the machine program editing computer determines whether there is a first selected tool name 163b whose sequence position 163d is "prior" among the second assigned tool names 163f extracted in process S4. If there is no first selected tool name 163b whose sequence position 163d is "prior" (No in process S5), the flow proceeds to process S7. In process S6, the machine program editing computer searches in a prior direction and executes process S10 when there is a first selected tool name 163b whose sequence position 163d is "prior" (Yes in process S5). In process S7, the machine program editing computer determines whether there is a first selected tool name 163b whose sequence position 163d is "subsequent" among the second assigned tool names 163f extracted in process S4. If there is no first selected tool name 163b whose sequence position 163d is "subsequent" (No in process S7), the machine program editing computer outputs the primary machine program 157a or the secondary machine program 157b if the primary machine program 157a is modified in process S10. In process S8, the machine program editing computer searches in the "subsequent" direction and executes process S10 when there is a first selected tool name 163b whose sequence position 163d is "subsequent" (Yes in process S7).

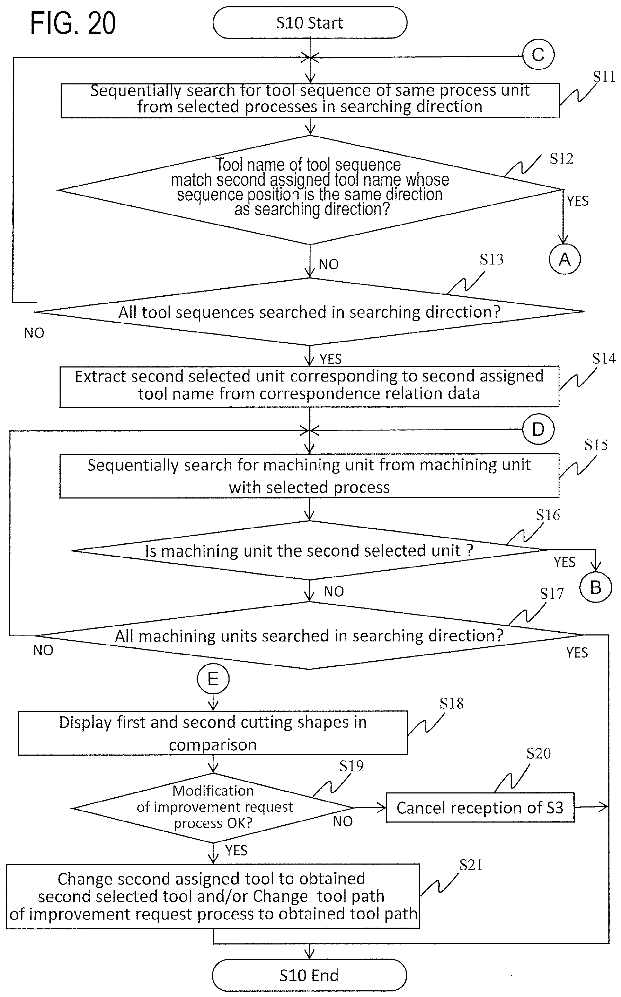

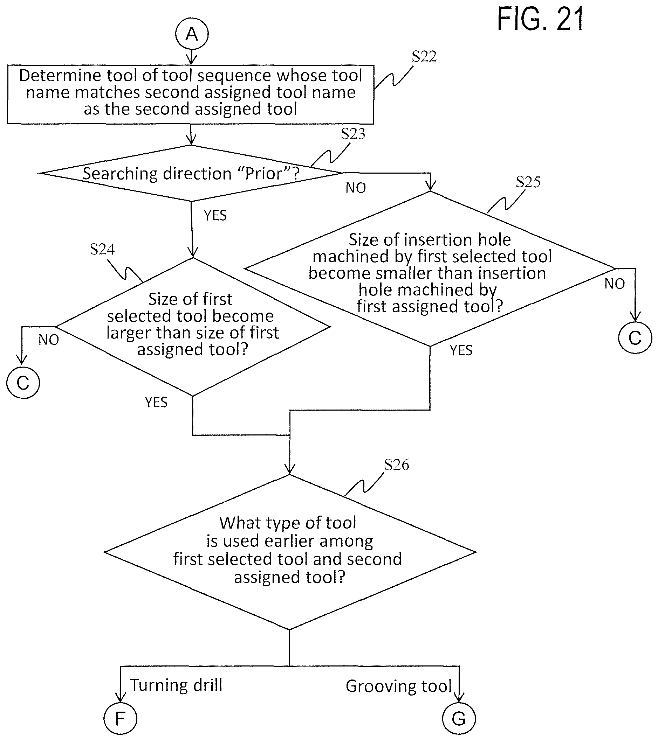

In process S11 illustrated in FIG. 20, the machine program editing computer sequentially searches the tool sequences from the selected process in the searching direction determined by process S6 or S8 in the same machining unit as the selected process. In process S12, the machine program editing computer determines whether the tool name of the searched tool sequence matches the second assigned tool name 163f which is the sequence position 163d in the same direction as the searching direction. For example, when the selected process is a tool sequence of a groove machining unit in a case where the searching direction is "prior", it is determined whether the tool name of the tool sequence matches either the tool name of "turning inner diameter" or the tool name of "turning drill end face" that are to be the second assigned tool name 163f whose the sequence position 163d is "prior". If there is a match (Yes in process S12), the flow proceeds to process S22 in FIG. 21. If there is no match (No in process S12), the machine program editing computer determines whether all of the tool sequences have been searched in the search direction in the machining unit including the selected process in process S13. If all of the tool sequences have not been searched (No in process S13), the machine program editing computer repeats the operation of process S11 to process S13 until all of the tool sequences have been searched.

In process S22 illustrated in FIG. 21, the machine program editing computer determines that the tool of the tool sequence whose tool name matches the second assigned tool name is the second assigned tool. In the corresponding relationship data 163, multiple second assigned tool names 163f having the same selected process and sequence position may be defined depending on the selected process. However, the tools that have tool names matching the second assigned tool names and tool sequences arranged in an order closest to the selected process are sequentially determined as the second assigned tool in process S22. Then, in process S24, the machine program editing computer determines whether the size of the first selected tool is larger than the size of the first assigned tool if the search direction is "prior" (Yes in process S23). The size of the first selected tool being larger than the size of the first assigned tool signifies that either the nominal diameter of the tool is increased, the cutting-edge width BW1 of the grooving tool is increased, or the minor cutting angle γt1 of the turning tool is reduced.

Then, in process S25, the machine program editing computer determines whether the size of the insertion hole to be processed by the first selected tool is smaller than the size of the insertion hole to be machined by the first assigned tool in a case where the searching direction is "subsequent" (No in process S23). The size of the first selected tool being larger than the size of the first assigned tool signifies that either the nominal diameter of the tool is increased, the cutting-edge width BW1 of the grooving tool is increased, or the minor cutting angle γt1 of the turning tool is reduced. The flow returns to process S11 when either the size of the first selected tool does not become larger than the size of the first assigned tool (No in process S24) or the size of the insertion hole machined by the first selected tool does not become smaller than the size of the insertion hole machined by the first assigned tool (No in process S25). In process S26, the machine program editing computer performs the following process according to the of tool to be used earlier among the first selected tools and the second assigned tools in a case where either the size of the first selected tool becomes larger than the size of the first assigned tool (Yes in process S24) or the size of the insertion hole to be machined by the first selected tool becomes smaller than the size of the insertion hole to be machined by the first assigned tool (Yes in process S25).

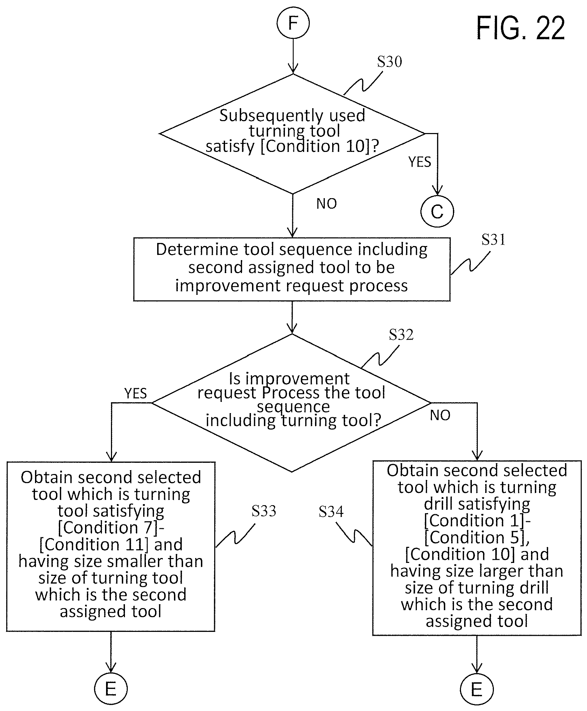

In a case where the tool to be used earlier is a turning drill in process S26, the machine program editing computer determines whether the turning tool used in a machining unit that is subsequently executed satisfies the above-described [Condition 10] in process S30 of FIG. 22. If [Condition 10] is satisfied (Yes in process S30), the flow returns to process S11. If [Condition 10] is not satisfied (No in process S30), the machine program editing computer determines the tool sequence including the second assigned tool to be the improvement request process. When the improvement request process is a tool sequence including a turning tool (Yes in process S32), the machine program editing computer obtains a second selected tool which is a turning tool that satisfies [Condition 7] to [Condition 11] and has a size smaller than the size of the turning tool in process S33. When the improvement request process is a tool sequence including a turning drill (No in process S32), the machine program editing computer obtains a second selected tool which is a turning drill that satisfies [Condition 1] to [Condition 5] and [Condition 10] and has a size larger than the size of the turning drill being the second assigned tool in process S34.

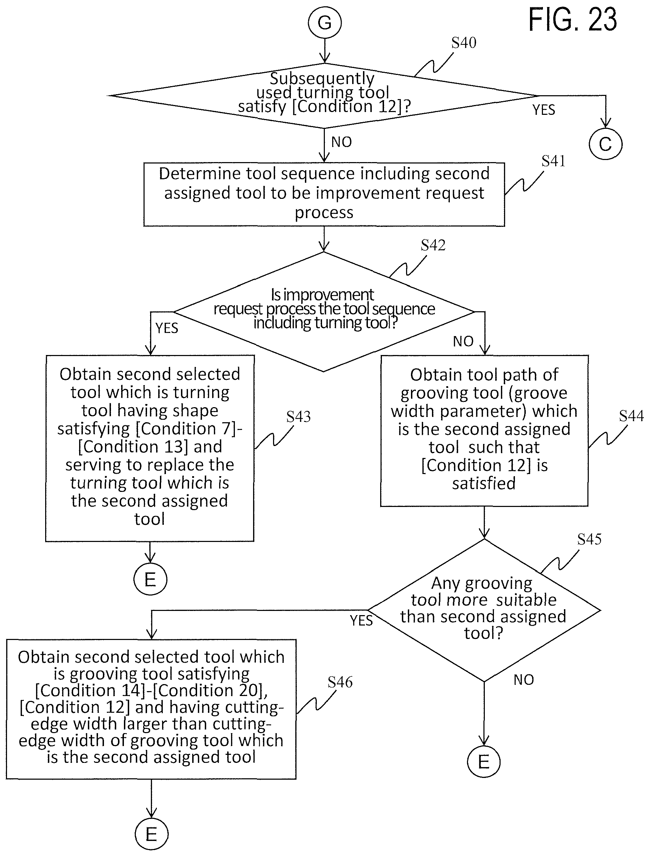

When the tool used earlier in process S26 is a grooving tool, the machine program editing computer determines whether the turning tool used in the machining unit to be subsequently executed satisfies the above-described [Condition 12] in process S40 of FIG. 23. If [Condition 12] is satisfied (Yes in process S40), the flow returns to process S11. If [Condition 12] is not satisfied (No in process S40), the machine program editing computer determines the tool sequence including the second assigned tool to be the improvement request process in process S41. When the improvement request process is a tool sequence including a turning tool (Yes in process S42), the machine program editing computer obtains a second selected tool which is a turning tool having a shape satisfying [Condition 7] to [Condition 13] and serving to replace the turning tool being the second assigned tool in process S43. When the improvement request process is a tool sequence including a grooving tool (No in process S42), the machine program editing computer obtains the tool path of the grooving tool (groove width parameter) which is the second assigned tool satisfying [Condition 12] in process S44. In process S45, the machine program editing computer determines whether there is a grooving tool that is more suitable than the second assigned tool. That is, the machine program editing computer determines whether there exists a second selected tool which is a grooving tool that satisfies [Condition 14] to [Condition 20] and has a cutting-edge width larger than a cutting-edge width of a grooving tool being the second assigned tool. If such a tool exists (No in process S45), the machine program editing computer obtains a second selected tool which is a grooving tool that satisfies [Condition 14] to [Condition 20] and [Condition 12] and has a cutting-edge width larger than the cutting-edge width of a grooving tool being the second assigned tool in process S46.

Referring to FIG. 20, when one of processes S33, S34, S43, S46 is completed, or, when the flow ends in process S45 without executing process S46 (No in process S45), the machine program editing computer calculates the first cutting shape cut off by the second assigned tool, instructs the display 154 (240) to display the first cutting shape, calculates the second cutting shape to be cut off in the improvement request process based on the change of the improvement request process, and instructs the display 154 (240) to display the second cutting shape in process S18 of FIG. 20. In process S19, the machine program editing computer receives an instruction affirming modification (modification OK) of the improvement request process from the user based on the shape displayed on the display 154 (240). Upon receiving an instruction to reject the modification of the improvement request process (No in process S19), the machine program editing computer cancels the acceptance of process S3 in process S20. When the instruction of the modification OK of the improvement request process is received (Yes in process S19), the machine program editing computer changes the second assigned tool to obtained the second selected tool and/or changes the tool path of the improvement request process to the obtained tool path in process S21.

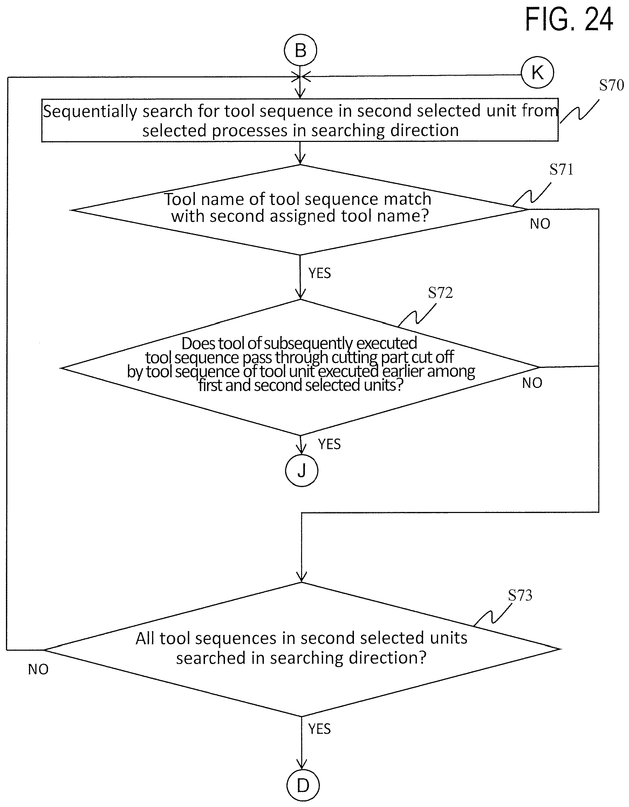

Returning to FIG. 20, in a case where the machine program editing computer determines that there is no tool sequence by a tool matching the second assigned tool name 163f in the same machining unit as the selected process or determines that there is no second assigned tool that cannot be used (Yes in process S13), the machine program editing computer extracts the second selected unit 163e corresponding to the second assigned tool name 163f from the correspondence relation data 163 in process S14. In process S15, the machine program editing computer searches the machining unit in order from the machining units having the selected process in the searching direction determined by process S6 or S8. In process S16, the machine program editing computer determines whether the searched machining unit matches the second selected unit 163e. If there is a match (Yes in process S16), the flow proceeds to process S70 in FIG. 24. If there is no match (No in process S16), the machine program editing computer determines whether all the machining units have been searched in the searching direction in process S17. When all the machining units have not been searched (No in process S17), the machine program editing computer repeats the operation from process S15 from process S17 until all the machining units have been searched.

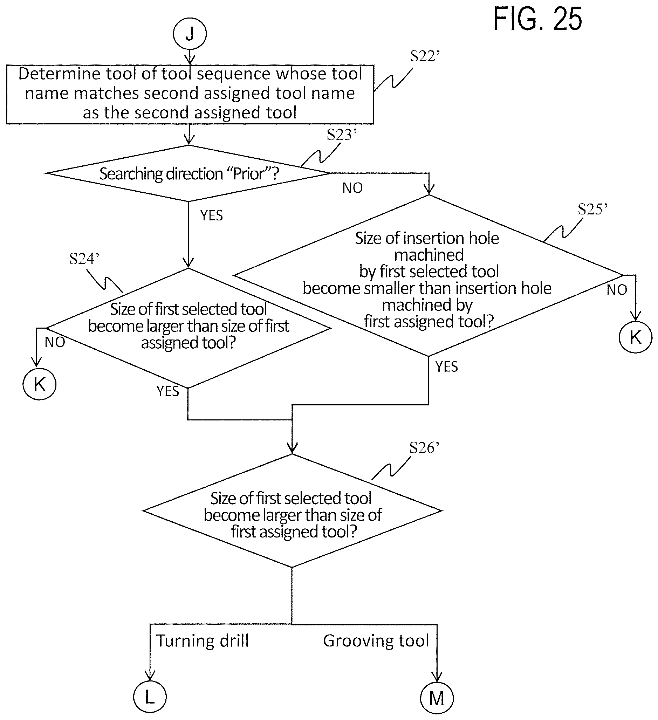

In process S70 illustrated in FIG. 24, the machine program editing computer sequentially searches the tool sequence in the second selected unit 163e from the selected processes in the searching direction determined by process S6 or S8. In process S71, the machine program editing computer determines whether the tool name of the searched tool sequence matches the second assigned tool name 163f which is to be the sequence position 163d in the same direction as the searching direction. For example, when the selected process is a tool sequence of a groove machining unit in a case where the searching direction is "prior", it is determined whether it matches either the tool name of "turning inner diameter" or the tool name of "turning drill end face" that is the second assigned tool name 163f whose sequence position 163d is "prior". If there is a match (Yes in process S71), the machine program editing computer determines whether the tool of the tool sequence to be subsequently executed passes the cutting part to be cut off by the tool sequence of the machining unit to be priorly executed among the first selected unit 163a and the second selected unit 163e in process S72. This can be determined by, for example, determining whether the machining part is an "inner diameter" in terms of the relation between the turning drill machining unit and the bar inner diameter machining unit. In terms of the relation between the groove machining unit and the bar machining unit, it is possible to determine whether the cutting start point of the bar machining unit is included in the shape of the groove machining prior to being changed. If the tool of the tool sequence to be subsequently executed passes through the cutting part to be cut off by the tool sequence of the machining unit to be priorly executed (Yes in process S72), the flow proceeds to process S22' of FIG. 25. If there is no match in process S71 (No in process S71) or if the tool does not pass through (No in process S72), the machine program editing computer determines whether all the tool sequences have been searched in the second selected unit 163e in the searching direction in process S73. If all of the tool sequences have not been searched (No in process S73), the machine program editing computer repeats the operation of process S72 to process S73 until all of the tool sequences have been searched. If all of the tool sequences have been searched, the flow returns to process S15 of FIG. 20.

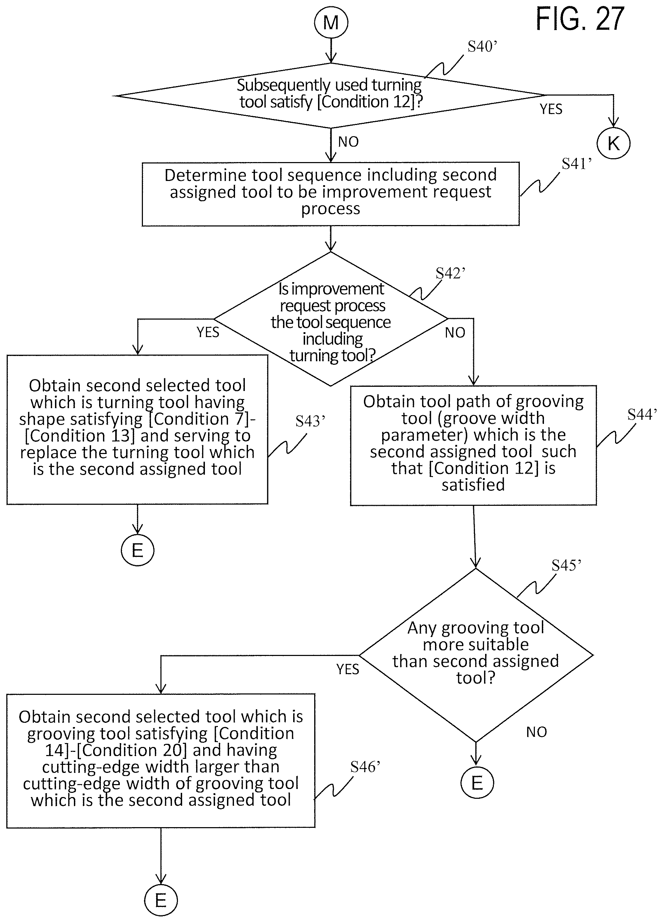

Except for the transition destinations of the processes indicated by encircled symbols, the details of each of processes from process S22' of FIG. 25 to process S46' of FIG. 27 are the same as those of process S22 of FIG. 21 to process S46 of FIG. 23 without the single quote [']. The transition destinations of the processes are as illustrated in FIGS. 20 and 24. Specifically, when the conditions of processes S24', S25', S30', and S40' are not satisfied, the transition to process S70 differs from the transition from process S22 to process S46. Therefore, the detailed description of the processes is omitted.

### <Operations and Effects of this Embodiment>

In this embodiment, a method of assisting machine program generation, a machine tool 100, and a machine program editing program 159 includes using a machine program editing computer to determine whether an improvement request process exists in any one of the machining processes other than the selected process in which a second assigned tool assigned to the improvement request process among the assigned tools used in machining processes is unusable in the improvement request process due to changing the first assigned tool to the first selected tool. Further, with this method, the machine tool 100, and the machine program editing program 159, the machine program editing computer changes a tool to be used in the improvement request process from the second assigned tool to the second selected tool that is usable in the improvement request process in a case where the improvement request process is determined to exist. Therefore, when changing the tool of one process of the machine program 157 consisting of multiple machining processes, it is possible to appropriately change the tool for another process affected by the change.

Further, in this embodiment, a method of assisting machine program generation, a machine tool 100, and a machine program editing program 159 includes using a machine program editing computer to determine whether an improvement request process exists in any one of the machining processes other than the selected process in which the first selected tool becomes unusable unless the preset tool path of the second assigned tool of multiple assigned tools corresponding to the process is changed due to changing from the first assigned tool to the first selected tool. With this method, the machine tool 100, and the machine program editing program 159, the machine program editing computer changes the tool path of the second assigned tool so that the first selected tool can be used when the improvement request process exists. Therefore, when changing the tool of one process of the machine program 157 consisting of multiple machining processes, it is possible to appropriately change the tool path for another process affected by the change.

Further, in this embodiment, a method of assisting machine program generation, a machine tool 100, and a machine program editing program 159 includes using a machine program editing computer to receive input from a user that changes the tool path of the tool used in the selected process among multiple machining processes from the preset tool path to the selected tool path. With this method, the machine tool 100, and the machine program editing program 159, the machine program editing computer determines whether an improvement request process exists in any one of the machining processes other than the selected process in which a second assigned tool assigned to the improvement request process among the assigned tools used in machining processes is unusable in the improvement request process due to changing the selected tool path. With this method, the machine tool 100, and the machine program editing program 159, the machine program editing computer changes a tool to be used in the improvement request process from the second assigned tool to the second selected tool that is usable in the improvement request process in a case where the improvement request process exists. Therefore, when changing the tool path of one process of a machine program consisting of multiple machining processes, it is possible to appropriately change the tool for another process affected by the change.

### <Modified Examples>

The technologies illustrated in the above-described embodiments are also applicable in the case of drilling a hole while adjusting the diameters of multiple tools such as drills, end mills, and boring tools. Although the parameters for finishing-X, the start point-X, and the end point-X in the above-described embodiments correspond to twice the X coordinates of the corresponding machining point (the length of the diameter of the machining hole), the parameters for finishing-X, start point-X, and the end point-X may correspond to the X coordinates of the corresponding machining point (the length of the radius of the machining hole). Although the primary machine program 157a of FIG. 4 exemplifies a case where the bar machining unit includes both the tool sequence for rough processing and the tool sequence for finishing processing, the tool sequence for rough processing may be omitted. In that case, a tool unit of roughing processing tool unit may be added in a case where the nominal diameter of the turning drill of the turning drill unit becomes smaller. Further, the bar machining unit of unit number 12 itself may be omitted, and the groove machining unit after unit number 13 may be described. In that case, the bar machining unit as illustrated in the above-described embodiment may be added in a case where the nominal diameter of the turning drill of the turning drill unit becomes smaller.

In the present application, the term "comprise" and its variations are intended to mean openended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

Also in the present application, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

Obviously, numerous modifications and variations of the present invention are possible in light of the above teachings. It is therefore to be understood that within the scope of the appended claims, the present invention may be practiced otherwise than as specifically described herein.

## Claims

1. A machine program generation assisting method, comprising:
associating, by a computer, assigned tools with tools to be used respectively in machining processes;
receiving, by the computer, from a user, an input to change a tool to be used in a selected process among the machining processes from a first assigned tool to a first selected tool, the first assigned tool being assigned to the selected process among the assigned tools;
determining, by the computer, whether an improvement request process exists in any one of the machining processes other than the selected process, a second assigned tool assigned to the improvement request process among the assigned tools being unusable in the improvement request process due to the changing from the first assigned tool to the first selected tool; and
changing, by the computer, a tool to be used in the improvement request process from the second assigned tool to a second selected tool that is usable in the improvement request process in a case where the improvement request process is determined to exist.

2. The machine program generation assisting method according to claim 1, further comprising:
calculating, by the computer, a first cutting shape to be cut by the second assigned tool and displaying the first cutting shape on a display;
calculating, by the computer, a second-cutting shape to be cut in the improvement request process based on the change in the improvement request process, displaying the second cutting shape on the display.

3. The machine program generation assisting method according to claim 1 or 2,
wherein the selected process includes a pre-machining process for forming an insertion hole into which a tool to be used in the improvement request process is inserted, and
the improvement request process includes a side surface enlarging process for inserting the tool into the insertion hole formed in the pre-machining process and cutting a side surface of the insertion hole.

4. The machine program generation assisting method according to claim 3, wherein
the improvement request process is determined to exist in a case where a size of the insertion hole formed by the first selected tool is smaller than a size of the insertion hole formed by the first assigned tool such that the second assigned tool cannot be inserted into the insertion hole.

5. The machine program generation assisting method according to claim 4, wherein
the second assigned tool is changed, by the computer, to the second selected tool having a shape capable of being inserted into the insertion hole formed by the first selected tool in a case where the improvement request process is determined to exist.

6. The machine program generation assisting method according to claim 1 or 2,
wherein the improvement request process includes a pre-machining process for forming an insertion hole into which a tool to be used in the selected process is inserted, and
the selected process includes a side surface enlarging process for inserting the tool into the insertion hole formed in the pre-machining process and cutting a side surface of the insertion hole.

7. The machine program generation assisting method according to claim 6, wherein
the improvement request process is determined to exist in a case where the first selected tool becomes larger than the first assigned tool such that the first selected tool cannot be inserted into the insertion hole.

8. The machine program generation assisting method according to claim 7, further comprising:
changing, by the computer, the second assigned tool to the second selected tool usable for forming an insertion hole having a size that allows insertion of the first selected tool in a case where the improvement request process is determined to exist.

9. The machine program generation assisting method according to any one of claims 3 to 8, wherein
a tool to be used to form the insertion hole is a drilling tool, and
a tool to be inserted into the insertion hole includes at least one of a turning tool or a grooving tool.

10. The machine program generation assisting method according to any one of claims 3 to 8, wherein
a tool to be used to form the insertion hole is a grooving tool, and
a tool to be inserted into the insertion hole is a turning tool.

11. The machine program generation assisting method according to any one of claims 1 to 10,
wherein the determining, by the computer, of the existence of the improvement request process includes
storing a correspondence relation between the selected process and the improvement request process in a storage of the computer,
acquiring information representing the improvement request process from the selected process by the input based on the correspondence relation, and
searching, by the computer, in the machining processes for a process that matches the improvement request process based on the information.

12. The machine program generation assisting method according to any one of claims 1 to 11, further comprising:
generating, by the computer, the machining program in which the first assigned tool of the assigned tools is corrected to the first selected tool in a case where the improvement request process is determined not to exist, and
generating, by the computer, the machining program in which the first assigned tool of the assigned tools is corrected to the first selected tool and the second assigned tool is corrected to the second selected tool in a case where the improvement request process is determined to exist.

13. A computer configured to carry out the machine program generation assisting method according to any one of claims 1 to 12.

14. A machine tool comprising a computer configured to perform the machine program generation assisting method according to any one of claims 1 to 12.

15. A computer program comprising instructions which, when executed by a computer, cause the computer to carry out the machine program generation assisting method according to any one of claims 1 to 12.
